# EUROPEAN PATENT APPLICATION

(11) **EP 4 539 539 A1**
(43) Date of publication of application: **16.04.2025**
(21) Application number: 22945206.5
(22) Date of filing: 07.06.2022
(51) Int. Cl.: H04W 36/00, H04W 76/19

(54) **FAILURE RECOVERY INDICATION METHOD AND APPARATUS THEREOF**

(71) Applicant: Beijing Xiaomi Mobile Software Co., Ltd., Beijing 100085 (CN)
(72) Inventor: XIONG, Yi, Beijing 100085 (CN); WU, Yumin, Beijing 100085 (CN)
(74) Representative: Dehns Germany Partnerschaft mbB
(86) International application number: PCT/CN2022/097455
(87) International publication number: WO 2023/236059

(57) **Abstract**

Embodiments of the present application disclose a failure recovery indication method and apparatus thereof, which can be applied to the technical field of communications. The method comprises: a terminal device determines whether failure recovery can be performed on the basis of configuration information for mobility, and then failure recovery processing is performed, thereby restricting the terminal device from trying to perform cell group activation for multiple times to perform failure recovery, and increasing a failure recovery speed.

## Description

### TECHNICAL FILED

The present application relates to the field of communication technology and, in particular, to an indication method for failure recovery and a device thereof.

### BACKGROUND

In Multi-Radio Dual Connectivity (MR-DC), a terminal device may use radio resources provided by two different schedulings, which are located on two different 5G Radio Access Network (NG-RAN) nodes connected via non-ideal backhaul, one providing NR access and the other providing E-UTRA or NR access. One node serves as Master Node (MN) and the other as Secondary Node (SN). The MN and SN are connected through a network interface, with at least the MN being connected to a core network.

Currently, selective activation of cell groups is used for mobility enhancement of the terminal device. For the selective activation of cell groups, when the terminal device performs mobility schemes for Master Cell group (MCG) or Secondary Cell group (SCG), the terminal device does not delete configurations for the selective activation of cell groups, and may attempt cell group activation multiple times for failure recovery. It is difficult to limit the number of times the terminal device attempts cell group activation for failure recovery.

### SUMMARY

Embodiments of the present application provide an indication method for failure recovery and a device thereof, which may be applied in the field of communication technology to enable determining whether failure recovery can be performed based on configuration information for mobility, thereby limiting multiple attempts by a terminal device to cell group activation for failure recovery.

In a first aspect, embodiments of the present application provide an indication method for failure recovery, the method being performed by a terminal device, and including: determining whether failure recovery is allowed to be performed based on configuration information for mobility.

In one implementation, the method further includes: in response to failure recovery being allowed to be performed based on the configuration information for mobility, performing failure recovery based on the configuration information for mobility; and/or in response to failure recovery not being allowed to be performed based on the configuration information for mobility, performing failure recovery in a manner other than the one in which failure recovery is performed based on the configuration information for mobility.

In one implementation, determining whether failure recovery is allowed to be performed based on the configuration information for mobility includes: determining, according to first information, whether failure recovery is allowed to be performed based on the configuration information for mobility.

In one implementation, the first information is stored by the terminal device and contained in a variable of the terminal device that is the same as, or different from a variable storing the configuration information for mobility.

In one implementation, the first information is indication information; and determining, according to the first information, whether failure recovery is allowed to be performed based on the configuration information for mobility includes: in response to a presence of the indication information, determining that failure recovery is allowed to be performed based on the configuration information for mobility, or in response to an absence of the indication information, determining that failure recovery is not allowed to be performed based on the configuration information for mobility.

In one implementation, the first information is indication information; and determining, according to the first information, whether failure recovery is allowed to be performed based on the configuration information for mobility includes: in response to the indication information having a first value, determining that failure recovery is allowed to be performed based on the configuration information for mobility, or in response to the indication information having a second value other than the first value, determining that failure recovery is not allowed to be performed based on the configuration information for mobility.

In one implementation, the method further includes: in response to first configuration information being received from a network device and indicating that the configuration information for mobility is allowed to be used for performing failure recovery, setting the indication information to be used for indicating that the configuration information for mobility is allowed to be used for performing failure recovery, or in response to the first configuration information indicating that the configuration information for mobility is not allowed to be used for performing failure recovery, setting the indication information to be used for indicating that the configuration information for mobility is not allowed to be used for performing failure recovery.

In one implementation, before determining, according to the first information, whether failure recovery is allowed to be performed based on the configuration information for mobility, the method further includes: in response to first configuration information from a network device not being received, setting the indication information to be used for indicating that the configuration information for mobility is allowed to be used for performing failure recovery, or in response to the first configuration information not being received, setting the indication information to be used for indicating that the configuration information for mobility is not allowed to be used for performing failure recovery.

In one embodiment, the method further includes: in response to performing failure recovery based on the configuration information for mobility, setting the indication information to be used for indicating that the configuration information for mobility is not allowed to be used for performing failure recovery, or in response to a successful failure recovery based on the configuration information for mobility, or, a successful access of the terminal device to a cell group, setting the indication information to be used for indicating that the configuration information for mobility is allowed to be used for performing failure recovery, or in response to a failure of performing failure recovery based on the configuration information for mobility, setting the indication information to be used for indicating that the configuration information for mobility is not allowed to be used for performing failure recovery.

In one implementation, the first information is counting information; and determining, according to the first information, whether failure recovery is allowed to be performed based on the configuration information for mobility includes: in response to a presence of the counting information and the counting information having a value less than a first count value, determining that the configuration information for mobility is allowed to be used for performing failure recovery, or in response to an absence of the counting information, or, the counting information having a value greater than or equal to the first count value, determining that the configuration information for mobility is not allowed to be used for performing failure recovery.

In one implementation, the first information is a count value of a counter; and determining, according to the first information, whether failure recovery is allowed to be performed based on the configuration information for mobility includes: in response to the count value not reaching a maximum value of the counter, determining that the configuration information for mobility is allowed to be used for performing failure recovery, or in response to the count value reaching the maximum value of the counter, determining that the configuration information for mobility is not allowed to be used for performing failure recovery.

In one implementation, the method further includes: in response to second configuration information being received from a network device and the second configuration information indicating the first count value or a maximum value of a counter, setting the counting information or the counter to be used for indicating that the configuration information for mobility is allowed to be used for performing failure recovery, or in response to the second configuration information indicating that the configuration information for mobility is not allowed to be used, not setting the counting information or setting a count value of the counter to the maximum value of the counter, to be used for indicating that the configuration information for mobility is not allowed to be used for performing failure recovery.

In one implementation, before determining, according to the first information, whether failure recovery is allowed to be performed based on the configuration information for mobility, the method further includes: in response to second configuration information from a network device not being received, setting the counting information or a counter to be used for indicating that the configuration information for mobility is allowed to be used, or in response to the second configuration information not being received, not setting the counting information or setting a count value of the counter to a maximum value of the counter, to be used for indicating that the configuration information for mobility is not allowed to be used for performing failure recovery.

In one implementation, the method further includes: incrementing the counting information or the count value of the counter by 1 upon performing failure recovery based on the configuration information for mobility, or resetting the counting information or the count value of the counter to zero or restoring the counting information or the count value of the counter to an initial value, upon successful failure recovery based on the configuration information for mobility or a successful access of the terminal device to a cell group.

In one implementation, determining whether failure recovery is allowed to be performed based on the configuration information for mobility includes: determining, according to a number of consecutive failures in performing failure recovery based on the configuration information for mobility, whether failure recovery is allowed to be performed based on the configuration information for mobility.

In one implementation, determining, according to a number of consecutive failures in performing failure recovery based on the configuration information for mobility, whether failure recovery is allowed to be performed based on the configuration information for mobility includes: in response to the number of consecutive failures being less than a first number threshold, determining that failure recovery is allowed to be performed based on the configuration information for mobility, or in response to the number of consecutive failures being greater than or equal to the first number threshold, determining that failure recovery is not allowed to be performed based on the configuration information for mobility.

In one implementation, determining whether failure recovery is allowed to be performed based on the configuration information for mobility includes: determining whether failure recovery is allowed to be performed based on the configuration information for mobility, depending on whether the configuration information for mobility is stored.

In one implementation, determining whether failure recovery is allowed to be performed based on the configuration information for mobility, depending on whether the configuration information for mobility is stored includes: in response to the configuration information for mobility being stored, determining that failure recovery is allowed to be performed based on the configuration information for mobility, or in response to the configuration information for mobility not being stored, determining that failure recovery is not allowed to be performed based on the configuration information for mobility.

In one implementation, the method further includes: in response to a failure of performing failure recovery based on the configuration information for mobility, deleting the configuration information for mobility.

In one implementation, the configuration information for mobility includes at least one of: configuration information for selective activation of cell groups, or configuration information for mobility management based on conditions.

In one implementation, in performing failure recovery based on the configuration information for mobility, a cell for failure recovery is selected by at least one of: performing cell selection during a re-establishment procedure to obtain the cell for failure recovery; selecting, according to a network configuration, the cell for failure recovery from the configuration information for mobility; selecting, according to a protocol specification, the cell for failure recovery from the configuration information for mobility; or selecting, according to a terminal device's implementation, the cell for failure recovery from the configuration information for mobility.

In this technical solution, it is determined whether failure recovery can be performed based on the configuration information for mobility, and thus failure recovery processing is performed, thereby limiting the terminal device from attempting cell group activation for failure recovery multiple times and improving the speed of failure recovery.

In a second aspect, embodiments of the present application provide another indication method for failure recovery, the method being performed by a network device, and including: sending a terminal device information for the terminal device to determine whether failure recovery is allowed to be performed based on configuration information for mobility.

In one implementation, sending the terminal device the information for the terminal device to determine whether failure recovery is allowed to be performed based on the configuration information for mobility includes: sending first configuration information to the terminal device, wherein the first configuration information indicates that the configuration information for mobility is allowed to be used for performing failure recovery, or, the configuration information for mobility is not allowed to be used for performing failure recovery.

In one implementation, sending the terminal device the information for the terminal device to determine whether failure recovery is allowed to be performed based on the configuration information for mobility includes: sending second configuration information to the terminal device, wherein the second configuration information indicates a first count value or a maximum value of a counter; or the second configuration information indicates that the configuration information for mobility is not allowed to be used for performing failure recovery.

In one implementation, sending the terminal device the information for the terminal device to determine whether failure recovery is allowed to be performed based on the configuration information for mobility includes: sending indication information to the terminal device for indicating the terminal device to delete the configuration information for mobility after a failure of performing failure recovery based on the configuration information for mobility.

In one implementation, the configuration information for mobility comprises at least one of: configuration information for selective activation of cell groups, or configuration information for mobility management based on conditions.

In this technical solution, the network device sends information to the terminal device for the terminal device to determine whether failure recovery can be performed based on the configuration information for mobility, thereby limiting the terminal device from attempting cell group activation for failure recovery multiple times and improving the speed of failure recovery.

In a third aspect, embodiments of the present application provide a communication device a communication device that possesses part or all of the functions of the terminal device described in the method of the first aspect. For instance, the functions of the communication device may encompass some or all of the functions described in the embodiments of the present application, or it may be capable of independently implementing the functions of any single embodiment of the present application. These functions can be realized through hardware, or through hardware executing corresponding software. The hardware or software includes one or more units or modules corresponding to the aforementioned functions.

In one implementation, the communication device may include in its structure a transceiver module and a processing module, the processing module being configured to support the communication device in performing the corresponding functions in the method described above. The transceiver module is used to support communication between the communication device and other devices. The communication device may further include a storage module for coupling with the transceiver module and the processing module, which holds the necessary computer programs and data of the communication device.

As examples, the processing module may be a processor, the transceiver module may be a transceiver or a communication interface, and the storage module may be a memory.

In a fourth aspect, embodiments of the present application provide another communication device, which possesses part or all of the functions of the network device described in the method example of the second aspect. For example, the functions of the communication device may encompass some or all of the functions described in the embodiments of the present application, or it may be capable of independently implementing the functions of any single embodiment of the present application. These functions can be realized through hardware, or through hardware executing corresponding software. The hardware or software includes one or more units or modules corresponding to the aforementioned functions.

In one implementation, the communication device may include in its structure a transceiver module and a processing module, the processing module being configured to support the communication device in performing the corresponding functions in the method described above. The transceiver module is used to support communication between the communication device and other devices. The communication device may further include a storage module for coupling with the transceiver module and the processing module, which holds the necessary computer programs and data of the communication device.

In a fifth aspect, embodiments of the present application provide a communication device including a processor that performs the method described in the first aspect above when the processor calls a computer program in memory.

In a sixth aspect, embodiments of the present application provide a communication device comprising a processor that performs the method described in the second aspect above when the processor calls a computer program in memory.

In a seventh aspect, embodiments of the present application provide a communication device including a processor and a memory in which a computer program is stored; the processor executes the computer program stored in the memory to cause the communication device to perform the method described in the first aspect above.

In an eighth aspect, embodiments of the present application provide a communication device including a processor and a memory in which a computer program is stored; the processor executes the computer program stored in the memory to cause the communication device to perform the method described in the second aspect above.

In a ninth aspect, embodiments of the present application provide a communication device including a processor and an interface circuit for receiving code instructions and transmitting them to the processor. The processor is used to run the code instructions to cause the device to perform the method described in the first aspect above.

In a tenth aspect, embodiments of the present application provide a communication device including a processor and an interface circuit for receiving code instructions and transmitting them to the processor. The processor is used to run the code instructions to cause the device to perform the method described in the second aspect above.

In an eleventh aspect, embodiments of the present application provide a communication system including the communication device described in the third aspect and the communication device described in the fourth aspect, or, alternatively, the communication device described in the fifth aspect and the communication device described in the sixth aspect, or, alternatively, the communication device described in the seventh aspect and the communication device described in the eighth aspect, or, alternatively, the communication device described in the ninth aspect and the communication device described in the tenth aspect.

In a twelfth aspect, embodiments of the present invention provide a computer-readable storage medium for storing instructions for use by the aforementioned terminal device, which, when the instructions are executed, cause the terminal device to perform the method described in the first aspect.

In a thirteenth aspect, embodiments of the present invention provide a computer-readable storage medium for storing instructions for use by the aforementioned network device, which, when the instructions are executed, cause the network device to perform the method described in the second aspect.

In a fourteenth aspect, the present application further provides a computer program product including a computer program which, when run on a computer, causes the computer to perform the method described in the first aspect above.

In a fifteenth aspect, the present application further provides a computer program product including a computer program that, when run on a computer, causes the computer to perform the method described in the second aspect above.

In a sixteenth aspect, the present application provides a chip system including at least one processor and an interface for supporting a terminal device in realizing the functions involved in the first aspect, for example, determining or processing at least one of the data or information involved in the method. In one possible design, the chip system further includes a memory for storing the necessary computer programs and data of the terminal device. The chip system may consist of a chip or may include a chip and other discrete devices.

In a seventeenth aspect, the present application provides a chip system including at least one processor and an interface for supporting a network device in realizing the functions involved in the second aspect, for example, determining or processing at least one of the data or information involved in the method. In one possible design, the chip system further includes a memory for storing the necessary computer programs and data of the terminal device. The chip system may consist of a chip or may include a chip and other discrete devices.

In an eighteenth aspect, the present application provides a computer program which, when run on a computer, causes the computer to perform the method described in the first aspect above.

In a nineteenth aspect, the present application provides a computer program which, when run on a computer, causes the computer to perform the method described in the second aspect above.

### BRIEF DESCRIPTION OF THE DRAWINGS

In order to more clearly illustrate the technical solutions in the embodiments or "BACKGROUND" section of the present application, the accompanying drawings to be used in the embodiments or "BACKGROUND" section of the present application will be described below.
FIG. 1 is a schematic diagram of architecture of a communication system provided by embodiments of the present application.
FIG. 2 is a flowchart of an indication method for failure recovery provided by embodiments of the present application.
FIG. 3 is a flowchart of another indication method for failure recovery provided by embodiments of the present application.
FIG. 4 is a flowchart of another indication method for failure recovery provided by embodiments of the present application.
FIG. 5 is a flowchart of another indication method for failure recovery provided by embodiments of the present application.
FIG. 6a is a flowchart of another indication method for failure recovery provided by embodiments of the present application.
FIG. 6b is a flowchart of another indication method for failure recovery provided by embodiments of the present application.
FIG. 7 is a flowchart of another indication method for failure recovery provided by embodiments of the present application.
FIG. 8 is a flowchart of another indication method for failure recovery provided by embodiments of the present application.
FIG. 9 is a flowchart of another indication method for failure recovery provided by embodiments of the present application.
FIG. 10 is a flowchart of another indication method for failure recovery provided by embodiments of the present application.
FIG. 11 is a flowchart of another indication method for failure recovery provided by embodiments of the present application.
FIG. 12 is a flowchart of another indication method for failure recovery provided by embodiments of the present application.
FIG. 13 is a flowchart of another indication method for failure recovery provided by embodiments of the present application.
FIG. 14 is a flowchart of another indication method for failure recovery provided by embodiments of the present application.
FIG. 15 is a schematic diagram of a structure of a communication device provided by embodiments of the present application.
FIG. 16 is a schematic diagram of a structure of another communication device provided by embodiments of the present application.
FIG. 17 is a schematic diagram of a structure of another communication device provided by embodiments of the present application.
FIG. 18 is a schematic diagram of a structure of a chip provided by embodiments of the present application.

### DETAILED DESCRIPTION

For ease of understanding, the terminology involved in this application is first introduced.

### 1. MR-DC

In Multi-Radio Dual Connectivity (MR-DC), a terminal device may use radio resources provided by two different schedulings, which are located on two different 5G Radio Access Network (NG-RAN) nodes connected via non-ideal backhaul, one providing NR access and the other providing E-UTRA or NR access. One node serves as Master Node (MN) and the other as Secondary Node (SN). The MN and SN are connected through a network interface, with at least the MN being connected to a core network.

### 2. MR-DC with EPC

Evolved UMTS Terrestrial Radio Access Network (E-UTRAN) supports MR-DC via E-UTRA-NR DC (EN-DC), where the terminal device is connected to an eNB serving as a MN and an en-gNB serving as a SN. The eNB is connected to EPC (i.e., 4G core network) via an S1 interface and to the en-gNB via an X2 interface. The en-gNBs may also be connected to the EPC via an S1-U interface and to other en-gNBs via an X2-U interface.

### 3. E-UTRA-NR Dual Connectivity (NGEN-DC)

NG-RAN supports NG-RAN E-UTRA-NR Dual Connectivity (NGEN-DC), where the terminal device is connected to an ng-eNB serving as a MN and a gNB serving as a SN. The ng-eNB is connected to the 5G Core Network (5GC) and the gNB is connected to the ng-eNB via an Xn interface.

### 4. NR-E-UTRA Dual Connectivity (NE-DC)

NG-RAN supports NR-E-UTRA DC (NE-DC), where the terminal device is connected to a gNB serving as a MN and an ng-eNB serving as a SN. The gNB is connected to the 5GC, and the ng-eNB is connected to the gNB via an Xn interface.

### 5. NR-NR Dual Connectivity

NG-RAN supports NR-NR DC (NR-DC), where the terminal device is connected to a gNB serving as a MN and another gNB serving as a SN. The primary gNB is connected to the 5GC via a NG interface and the two gNBs are connected to each other via an Xn interface. The secondary gNB may also be connected to the 5GC via a NG-U interface. In addition, NR-DC may also be used for the access of the terminal device to a single gNB serving as both the MN and SN, with both MCG and SCG configured simultaneously.

Under dual connectivity, the terminal device can access two cell groups, namely Master Cell Group (MCG) and Secondary Cell Group (SCG). In the MCG, there may be a number of cells, one of which is used to initiate the initial access and is referred to as the Primary Cell (PCell). As the name suggests, the PCell is the most "primary" cell in the MCG. The PCell in the MCG and Secondary Cell (SCell) in the MCG are combined through Carrier Aggregation (CA). In the MCG, the primary cell is referred to as the PCell and the secondary cell is referred to as the SCell. In the SCG, the Primary Secondary Cell is referred to as PSCell, and the secondary cell is referred to as the SCell. Since a lot of signaling is sent only on the PCell and the PSCell, for the convenience of description, the protocol also defines a concept of a special cell (sPCell), which collectively refers to the PCell and the PSCell.

### 6. Mobility Management Based on Conditional Triggers

In the mobility management based on condition-triggered mechanisms, the terminal device realizes the condition-triggered mobility management based on conditions configured by the network device and associated candidate cells. The terminal device triggers the mobility management process and accesses its associated candidate cells after satisfying the conditions. The conditions configured by the network device may be specific events based on measurement results, or events based on location or time. The associated candidate cell may be a candidate primary cell or primary secondary cell, corresponding respectively to a relevant Conditional Handover (CHO) and Conditional PSCell Change (CPC)/Conditional PSCell Addition (CPA) in the condition-triggered mobility management. Currently, it supports MN-initiated CHO, MN-initiated CPA/CPC, and SN-initiated CPC.

### 7. Selective Activation of Cell Groups

During CHO and CPC/CPA, the UE with CHO/CPC/CPA configurations has to release the CHO/CPC/CPA configurations upon completing random access to the target PCell/PSCell. Therefore, if the network device does not reconfigure and reinitialize the CHO/CPC/CPA, the terminal device will not have the opportunity to subsequently continue the CHO/CPC/CPA process. This will increase the delay in handover or SCG change and increase the signaling overhead, particularly in FR2 scenarios with frequent CG changes.

Therefore, selective activation of cell groups in MR-DC is proposed in the corresponding Mobility Enhancement Project, which enables the subsequent configuration s to be executed after a change in the cell group (CG) without the need for the network device to reconfigure or reinitialize the corresponding configurations for the selective activation of cell groups. This can reduce signaling overhead and the interruption duration during the CG change. The configuration for the selective activation of cell groups may include, but is not limited to, at least one of: a configuration ID, an activation condition (if applicable), or a configuration for to-be-activated cell groups or cells.

In the selective activation of cell groups, after activating a new cell group configuration, the terminal device will not delete the corresponding configurations for the selective activation of cell groups.

### 8. Failure Recovery Method Based on CHO

In the existing re-establishment procedure, for a terminal device that has experienced MCG Remote Line Failure (RLF) or MCG synchronization reconfiguration failure (handover failure), if, through the cell selection during the reselection process, the selected cell is a candidate target cell configured for CHO, the terminal device applies the configuration (condRRCReconfig) of this candidate target cell in the CHO, executes the CHO process, and accesses this candidate target cell.

Considering the interruption, the terminal device, in case of failure, is not allowed to make multiple attempts to recover from the failure through CHO. Therefore, the existing protocols specify that if the CHO executed during the failure processing fails, the terminal device will perform a re-establishment, meaning that multiple attempts to execute the CHO are not allowed in case of failure. To implement this restriction, if the CHO is triggered due to failure recovery, the terminal device will delete the stored CHO configuration.

In selective activation of cell groups, the terminal device can activate or deactivate a pre-configured candidate cell group or cell based on the configuration (e.g., activation message) issued by the network device or corresponding activation events, without the need to re-provide a cell group configuration. Alternatively, in selective activation of cell groups, the terminal device will not delete the corresponding configuration information for selective activation of cell groups after activating a new cell or cell group, or applying a new cell configuration or cell group configuration, or accessing a new cell or cell group.

Selective activation of cell groups can also be referred to as cell group activation. It allows the corresponding configuration information to be executed even after the cell group or cell is changed, eliminating the need for the network to reconfigure or reinitialize the corresponding configuration information for cell group activation. This can reduce signaling overhead and the interruption duration during cell group changes. The configuration information for cell group activation may include: a configuration ID and a configuration for a target cell or target cell group. Optionally, the configuration information for cell group activation may also include a trigger condition (which may also be referred to as an execution condition or an activation condition). In the embodiments of the present application, the network may refer to a network device.

In an embodiment, cell group activation is a mobility management process that encompasses any one of mobility management processes by configuring a cell group activation configuration, where the terminal device activates or deactivates a corresponding cell or cell group, or accesses a cell or cell group after applying a corresponding cell configuration or cell group configuration, based on signaling sent by the network, criteria specified in protocols, or autonomous decisions made by the terminal device.

In an embodiment, cell group activation is a mobility management process that encompasses any one of mobility management processes where, after performing the mobility process, corresponding partial or full configuration information is not deleted or released. Corresponding partial or full configuration information is not deleted or released, which can also be referred to as being reserved.

In the mobility management based on condition-triggered mechanisms, the terminal device realizes the condition-triggered mobility management based on conditions configured by the network device and associated candidate cells. The terminal device triggers the mobility management and accesses its associated candidate cells after satisfying the conditions. The conditions configured by the network device may be specific events based on measurement results, or events based on location or time. The associated candidate cell may be a candidate primary cell or primary secondary cell, corresponding respectively to a relevant CHO and CPC/CPA in the condition-triggered mobility management. Currently, it supports MN-initiated CHO, MN-initiated CPA/CPC, and SN-initiated CPC. In the embodiments of the present application, the character "/" denotes "or".

The configurations of CHO and CPA/CPC each include a corresponding configuration ID, an execution condition, and a configuration for a candidate target cell.

However, simultaneous configuration of CHO and CPA/CPC is currently not supported. To enhance robustness and reduce the impact on the terminal device's throughput capacity, CHO and CPC/CPA can be combined. For example, the target MCG can be included in CHO, along with candidate SCGs for CPC/CPA.

Cell groups may include one or more of a Primary Cell Group (MCG) and a Secondary Cell Group (SCG). The MCG may include one or more of a Primary Cell (PCell) and a Secondary Cell (SCell). The SCG may include one or more of a Primary Secondary Cell (PSCell) and a SCell.

Selective activation of cell groups may include cell selective activation or cell activation, e.g., one or more of: PCell activation, PSCell activation, and SCell activation.

It should be noted that, in this application, an indication method for failure recovery provided by any one of the embodiments may be performed alone, or in combination with possible implementations in other embodiments. It may also be performed in combination with any of the technical solutions in the related art.

In order to better understand the indication method for failure recovery disclosed by embodiments of the present application, a communication system applicable for the embodiments of the present application will first be described below.

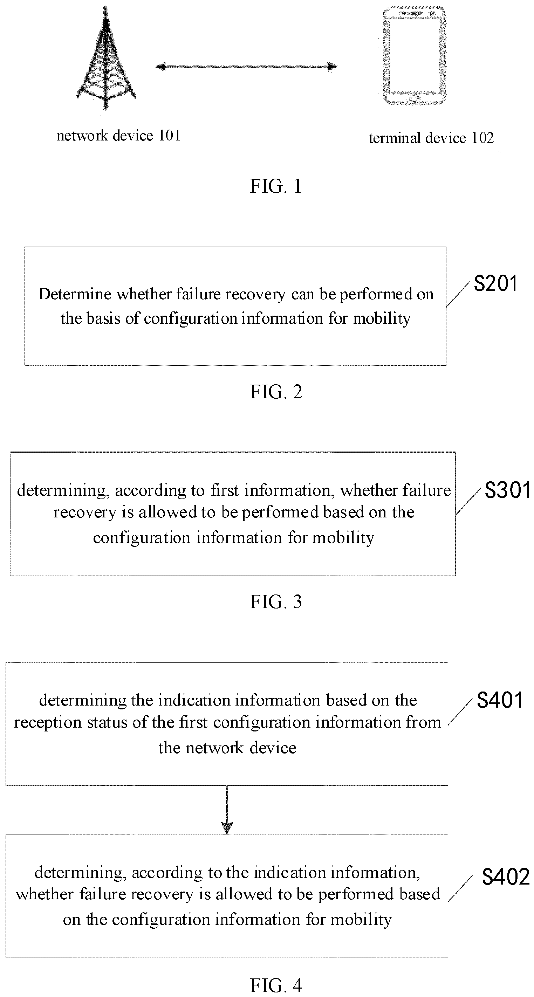

Referring to FIG. 1, FIG. 1 is a schematic diagram of architecture of a communication system provided by embodiments of the present application. The communication system may include, but is not limited to, a network device and a terminal device. The number and form of the devices shown in FIG. 1 are for example only and do not constitute a limitation of the embodiments of the present application. In practical applications, it may include two or more network devices and two or more terminal devices. The communication system shown in FIG. 1 is exemplified by including a network device 101 and a terminal device 102.

It should be noted that the technical solutions of the embodiments of the present application can be applied to various communication systems, e.g., a long-term evolution (LTE) system, a 5th generation (5G) mobile communication system, a 5G new radio (NR) system, or other future new mobile communication systems.

The network device 101 in the embodiments of the present application is an entity on the network side for transmitting or receiving signals. For example, the network device 101 may be an evolved NodeB (eNB), a transmission reception point (TRP), a next generation NodeB (gNB) in a NR system, a base station in other future mobile communication systems, or an access node in a wireless fidelity (Wi-Fi) system, etc. The embodiments of the present application do not limit the specific technology and the specific device form used for the network device. The network device provided in the embodiments of the present application may be composed of a central unit (CU) and a distributed unit (DU). The CU may also be called a control unit. The CU-DU structure can be used to split the protocol layer of a network device, such as a base station, so that part of the protocol layer functions are placed in the CU for centralized control, while the remaining part or all of the protocol layer functions are distributed in the DU, which is controlled centrally by the CU.

The terminal device 102 in the embodiments of the present application is an entity on the user side for receiving or transmitting signals, such as a mobile phone. The terminal device may also be referred to as a terminal, user equipment (UE), mobile station (MS), mobile terminal (MT), and the like. The terminal device may be a car with communication functions, an intelligent car, a mobile phone, a wearable device, a tablet computer (Pad), a computer with wireless transceiver functions, a virtual reality (VR) terminal device, an augmented reality (AR) terminal device, a wireless terminal device in industrial control, a wireless terminal device in self-driving technology, a wireless terminal device in remote medical surgery, a wireless terminal device in smart grid, a wireless terminal device in transportation safety, a wireless terminal device in smart city, a wireless terminal device in smart home, and so on. The embodiments of this application do not limit the specific technology and the specific device form used for the terminal device.

Currently, selective activation of cell groups is used for mobility enhancement of the terminal device. For the selective activation of cell groups, when the terminal device has performed MCG or SCG mobility, the terminal device will not delete the configuration for selective activation of cell groups, and may attempt cell group activation multiple times for failure recovery. It is difficult to limit the number of times the terminal device attempts cell group activation for failure recovery.

It should be understood that the communication system described in the embodiments of the present application is intended to more clearly illustrate the technical solutions of the embodiments of the present application and does not constitute a limitation on the technical solutions provided by the embodiments of the present application. A person of ordinary skill in the art may know that, with the evolution of the system architecture and the emergence of new service scenarios, the technical solutions provided by the embodiments of the present application are equally applicable to similar technical problems.

The indication method for failure recovery and the device thereof provided in the present application are described in detail below in conjunction with the accompanying drawings.

It should to be noted that the terminal device in the following embodiments may be a terminal device in the MR-DC, which can access two cell groups, namely a master cell group (MCG) and a secondary cell group (SCG). The configuration information for mobility includes configuration information for mobility of a candidate MCG, and configuration information for mobility of a candidate SCG.

Referring to FIG. 2, FIG. 2 is a flowchart of an indication method for failure recovery provided by embodiments of the present application. The method may be performed by the terminal device in FIG. 1. As shown in FIG. 2, the method may include, but is not limited to, the following steps.

Step S201, determining whether failure recovery is allowed to be performed based on configuration information for mobility.

In the embodiments of the present application, the configuration information for mobility includes, but is not limited to, at least one of the following: configuration information for selective activation of cell groups, or configuration information for mobility management based on conditions.

The configuration information for selective activation of cell groups is, for example, configuration information for selective activation of master cell groups, or configuration information for selective activation of secondary cell groups, etc. The configuration information for mobility management based on conditions is, for example, configuration information for conditional handover (CHO), configuration information for conditional PSCell change (CPC), or configuration information for conditional PSCell addition (CPA), etc.

In the embodiments of the present application, the configuration information for mobility may be configured by the network device and stored in a variable of the terminal device. That is, the terminal device, after receiving a message containing the configuration information for mobility sent by the network device, may update the message to be stored in a variable of the terminal device. The configuration information for mobility, which may be carried in an RRCReconfiguration message, is sent by the network device to the terminal device.

In one example, the configuration information for mobility may be a mobility configuration stored by the terminal device.

In one example, the terminal device, upon receiving a message containing a configuration for mobility sent by the network device, stores the configuration for mobility or updates a stored configuration for mobility based on this message sent by the network device.

In one example, the terminal device uses a terminal variable to store the configuration information for mobility. The terminal variable may be a UE variable, which may also be referred to as a Var variable.

In the embodiments of the present application, the configuration information for mobility stored by the terminal device may include a mobility configuration for a candidate master cell group, and/or a mobility configuration for a candidate secondary cell group.

For example, types of a "mobility management process" corresponding to the configuration information for mobility may include, but are not limited to, at least one of the following: (1) a mobility process based on conditional triggers (e.g., CHO, CPA, CPC); and (2) a selective activation process for cell groups. In other words, the "mobility management process" may include both of the above mentioned mobility management processes, or may be a specific one of them.

For example, a variable of the terminal device, i.e., the Var variable, may contain an instruction based on which the terminal device determines whether it can perform failure recovery through the "mobility management process".

In some embodiments, an indication parameter is defined in the Var variable. Based on a value of the indication parameter in the Var variable, or depending on whether the indication parameter is included, it is determined whether the UE can perform failure recovery through the "mobility management process".

In the above example, the terminal device can only perform failure recovery through the "mobility management process" when this indication parameter is "yes/can/allowed/available" or is included in the Var variable. When the terminal device executes the "mobility management process" for failure recovery, the value of this indication parameter is changed to "no/cannot/not allowed/not available" or the indication parameter is removed from the Var variable. Upon successful failure recovery by the terminal device, the value of this parameter is reset to "yes/can/allowed/available" or this parameter is included in the Var variable.

For example, the maximum number of times a terminal device is allowed to attempt failure recovery through the "mobility management process" after a failure occurs is limited to m.

In some embodiments, a count parameter is included in the corresponding Var variable. The terminal device determines whether it can perform failure recovery through the "mobility management process" by checking whether the value of this count parameter in the Var variable is less than the maximum number of attempts, m, configured by the network.

In the above example, the terminal device is only allowed to perform failure recovery through the "mobility management process" when this count parameter is less than the maximum number of attempts configured by the network. When the terminal device performs the "mobility management process" for failure recovery, this count parameter is incremented by one. Upon successful failure recovery by the terminal device, this count parameter is reset to 0.

For example, a counter is defined to indicate the maximum number of attempts allowed for failure recovery through the "mobility management process".

In the above example, when the counter reaches its maximum value, the terminal device will not support subsequent failure recovery through the "mobility management process". When the terminal device executes the "mobility management process" for failure recovery, the counter is incremented. Upon successful failure recovery by the terminal device, the counter is reset.

For example, for failure recovery through the "mobility management process," the terminal device does not delete the configuration information corresponding to the selective activation of cell groups that is stored in the terminal device when applying the configuration information (e.g., RRCReconfiguration) of the corresponding cell or cell group.

In the above example, it is possible to determine, based on the terminal device's implementation, that after failure recovery through the "mobility management process" fails (or after m consecutive failures in failure recovery), the terminal device is no longer allowed to continue using the "mobility management process" for failure recovery.

For example, for failure recovery through the "mobility management process," the terminal device deletes the configuration information corresponding to the selective activation of cell groups that is stored in the terminal device when applying the configuration information (e.g., RRCReconfiguration) of the corresponding cell or cell group.

In the embodiments of the present application, in one example, the terminal device may determine, based on a first message, whether failure recovery can be performed based on configuration information for mobility. The first message may be determined based on information from the network device that is used for determining whether failure recovery can be performed based on the configuration information for mobility, and subsequently updated according to the situation of the terminal device performing failure recovery based on the configuration information for mobility. The first message may be used for indicating that failure recovery can be performed based on the configuration information for mobility; alternatively, the first message may be used for indicating that failure recovery cannot be performed based on the configuration information for mobility.

In another example, the terminal device may determine whether failure recovery can be performed based on configuration information for mobility, according to the number of consecutive failures in performing failure recovery based on the configuration information for mobility.

In another example, the terminal device may determine whether failure recovery can be performed based on configuration information for mobility, depending on whether the configuration information for mobility is stored. If the terminal device fails to perform failure recovery based on the configuration information for mobility, it will delete the configuration information for mobility.

In the embodiments of the present application, after determining whether failure recovery can be performed based on the configuration information for mobility, the terminal device may further perform the following processes: in response to failure recovery being allowed to be performed based on the configuration information for mobility, performing failure recovery based on the configuration information for mobility; and/or, in response to failure recovery not being allowed to be performed based on the configuration information for mobility, performing failure recovery using a manner other than the one based on the configuration information for mobility. For example, the other manner is to use a re-establishment procedure for failure recovery.

In one example, in response to failure recovery being allowed to be performed based on the configuration information for mobility, failure recovery is performed based on the configuration information for mobility. The first message is processed based on a failure result, or, the number of consecutive failures is processed, or, the stored configuration information for mobility is deleted, or the like.

In another example, in response to failure recovery not being allowed to be performed based on the configuration information for mobility, failure recovery is performed in a manner other than the one based on the configuration information for mobility. When it is determined that failure recovery cannot be performed based on the configuration information for mobility, it is indicated that failure recovery based on the configuration information for mobility is not allowed.

In the embodiments of the present application, in performing failure recovery based on the configuration information for mobility, a way of selecting a cell for failure recovery includes, but is not limited to, at least one of the following ways: performing cell selection in a re-establishment procedure to obtain a cell for failure recovery; selecting, according to a network configuration, the cell for failure recovery from the configuration information for mobility; selecting, according to a protocol specification, the cell for failure recovery from the configuration information for mobility; or selecting, according to a terminal device's implementation, the cell for failure recovery from the configuration information for mobility.

In one example, taking the configuration information for mobility including, but not limited to, the configuration information for selective activation of cell groups as an example, if a failure occurs at the terminal device, the terminal device initiates a re-establishment procedure and selects a suitable cell for failure recovery. If it is determined that failure recovery can be performed based on the configuration information for mobility and the cell for failure recovery is a cell in a to-be-activated cell group of the configuration information for selective activation of cell groups, failure recovery processing is performed based on the configuration information for this to-be-activated cell group.

In one example, taking the configuration information for mobility including, but not limited to, the configuration information for selective activation of cell groups as an example, if a failure occurs at the terminal device, the terminal device initiates a re-establishment procedure, starts a timer T311, and performs cell selection to select a suitable cell for failure recovery. If it is determined that failure recovery can be performed based on the configuration information for mobility and the cell for failure recovery is a cell in a to-be-activated cell group of the configuration information for selective activation of cell groups, failure recovery processing is performed based on the configuration information for this to-be-activated cell group.

In one example, if the timer T311 times out, an idle state is entered. In one example, the start and stop of the timer T311 can be referred to as shown in Table 1 below:

**Table 1**

| Timer | Start | Stop | Timeout |
|---|---|---|---|
| T311 | Upon initiating the RRC connection re-establishment procedure | Upon selection of a suitable NR cell | Enter RRC_IDLE |

According to the indication method for failure recovery of embodiments of the present application, the terminal device determines whether failure recovery can be performed based on the configuration information for mobility, thereby limiting multiple attempts by the terminal device to cell group activation for failure recovery and improving the speed of failure recovery.

It should be noted that these possible implementations described above may be performed individually or in combination, and the embodiments of the present application do not limit this.

Referring to FIG. 3, FIG. 3 is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

As shown in FIG. 3, the method may include, but is not limited to, the following steps.

Step S301, determining, based on first information, whether failure recovery is allowed to be performed based on the configuration information for mobility.

In the embodiments of the present application, the first information is stored by the terminal device and contained in a variable of the terminal device. The variable in which the first information is stored is the same as a variable in which the configuration information for mobility is stored. Alternatively, the variable in which the first information is stored is different from the variable in which the configuration information for mobility is stored. That is, the first information and the configuration information for mobility may be stored in the same variable, or, the first information and the configuration information for mobility may be stored in different variables.

In the embodiments of the present application, the first information may be indication information, counting information, or a count value of a counter. The parameter type of the counting information and the count value may be an integer. The parameter type of the value of the indication information may be an enumerated type, such as 'true' or 'false', etc.

In the case where the first information is the indication information, one example is that whether failure recovery can be performed based on the configuration information for mobility may be determined according to the presence or absence of the indication information. For example, if the indication information is present, the terminal device determines that failure recovery can be performed based on the configuration information for mobility; if the indication information is absent, the terminal device determines that failure recovery cannot be performed based on the configuration information for mobility. For another example, if the indication information is absent, the terminal device determines that failure recovery can be performed based on the configuration information for mobility; if the indication information is present, the terminal device determines that failure recovery cannot be performed based on the configuration information for mobility.

In another example, whether failure recovery can be performed based on the configuration information for mobility may be determined according to the value of the indication information. For example, if the value of the indication information is a first value, the terminal device determines that failure recovery can be performed based on the configuration information for mobility; if the value of the indication information is a second value other than the first value, the terminal device determines that failure recovery cannot be performed based on the configuration information for mobility.

In the case where the first information is the counting information, whether failure recovery can be performed based on the configuration information for mobility may be determined according to the presence or absence of the counting information or whether the counting information is greater than a first count value. For example, if the counting information is present and its value is less than the first count value, it is determined that the configuration information for mobility can be used for performing failure recovery; if the counting information is absent, or if its value is greater than or equal to the first count value, it is determined that the configuration information for mobility cannot be used for performing failure recovery.

In the case where the first information is a count value of the counter, whether failure recovery can be performed based on the configuration information for mobility may be determined depending on whether the count value reaches a maximum value of the counter. For example, if the count value has not reached the maximum value of the counter, it is determined that the configuration information for mobility can be used for performing failure recovery; if the count value reaches the maximum value, it is determined that the configuration information for mobility cannot be used for performing failure recovery.

In the embodiments of the present application, the configuration information for mobility may be configured by the network device and stored in a variable of the terminal device. That is, the terminal device, after receiving a message containing the configuration information for mobility from the network device, may update the message to be stored in a variable of the terminal device. That is, the first information may be stored in a variable of the terminal device.

For example, the terminal device may determine, via the first information, whether failure recovery can be performed through the "mobility management process", that is using the configuration information corresponding to the "mobility management process" for failure recovery.

In some embodiments, the terminal device may use the configuration information of the "selective activation of cell groups", that is, apply the cell group configuration corresponding to a selected "to-be-activated cell group" to active this cell group.

In other embodiments, the terminal device may use the configuration information of the "mobility process based on conditional triggers", that is, apply a cell group configuration corresponding to a selected candidate target cell to perform a corresponding conditional reconfiguration.

According to the indication method for failure recovery of embodiments of the present application, the terminal device determines, based on the first information, whether failure recovery can be performed based on the configuration information for mobility. The first information may be used for indicating that failure recovery can be performed based on the configuration information for mobility; alternatively, the first information may be used for indicating that failure recovery cannot be performed based on the configuration information for mobility, thereby limiting multiple attempts by the terminal device to cell group activation for failure recovery and improving the speed of failure recovery.

It should be noted that these possible implementations described above may be performed individually or in combination, and the embodiments of the present application do not limit this.

Referring to FIG. 4, FIG. 4 is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

In the embodiments of the present application, the first information may be indication information. In one example, whether failure recovery can be performed based on the configuration information for mobility may be determined according to the presence or absence of the indication information. In another example, whether failure recovery can be performed based on the configuration information for mobility according to a value of the indication information.

Based on the first information in the above two examples, the method may include, but is not limited to, the following steps, as shown in FIG. 4.

Step S401, determining the indication information based on the reception status of the first configuration information from the network device.

In the embodiments of the present application, the reception status of the first configuration information from the network device includes, for example, that the first configuration information from the network device is received, or, the first configuration information from the network device is not received.

In the case where the first configuration information is received by the terminal device from the network device, in one example, the first configuration information indicates that the configuration information for mobility can be used for performing failure recovery. Consequently, the terminal device sets the indication information to be used for indicating that the configuration information for mobility can be used for performing failure recovery. For example, when determining, according to the presence or absence of the indication information, whether failure recovery can be performed based on the configuration information for mobility, the terminal device may include this indication information in a variable. For another example, when determining, according to a value of the indication information, whether failure recovery can be performed based on the configuration information for mobility, the terminal device may include this indication information in a variable and set the value of the indication information to a first value.

In another example, the first configuration information indicates that the configuration information for mobility cannot be used for performing failure recovery. Consequently, the terminal device sets the indication information to be used for indicating that the configuration information for mobility cannot be used for performing failure recovery. For example, when determining, according to the presence or absence of the indication information, whether failure recovery can be performed based on the configuration information for mobility, the terminal device may not set the indication information in a variable. For another example, when determining, according to a value of the indication information, whether failure recovery can be performed based on the configuration information for mobility, the terminal device may include this indication information in a variable and set the value of the indication information to a second value other than the first value.

In the case where the terminal device does not receive the first configuration information from the network device, in one example, the terminal device may set the indication information to be used for indicating that the configuration information for mobility can be used for performing failure recovery. For example, when determining, according to the presence or absence of the indication information, whether failure recovery can be performed based on the configuration information for mobility, the terminal device may include this indication information in a variable. For another example, when determining, according to a value of the indication information, whether failure recovery can be performed based on the configuration information for mobility, the terminal device may include this indication information in a variable and set the value of the indication information to a first value.

In another example, the terminal device may set the indication information to be used for indicating that the configuration information for mobility cannot be used for performing failure recovery. For example, when determining, according to the presence or absence of the indication information, whether failure recovery can be performed based on the configuration information for mobility, the terminal device may not set the indication information in a variable. For another example, when determining, according to a value of the indication information, whether failure recovery can be performed based on the configuration information for mobility, the terminal device may include this indication information in a variable and set the value of the indication information to a second value other than the first value.

In the embodiments of the present application, it should be noted that after determining the indication information, the terminal device may carry out an update process for the indication information based on the received first configuration information, i.e., resetting the indication information based on the received first configuration information.

Step S402, determining, according to the indication information, whether failure recovery is allowed to be performed based on the configuration information for mobility.

According to embodiments of the present application, in one example, in response to a presence of the indication information, the terminal device determines that failure recovery can be performed based on the configuration information for mobility; or, in response to an absence of the indication information, it is determined that failure recovery cannot be performed based on the configuration information for mobility.

In another example, in response to the indication information having a first value, it is determined that failure recovery can be performed based on the configuration information for mobility; or, in response to the indication information having a second value other than the first value, it is determined that failure recovery cannot be performed based on the configuration information for mobility.

Taking the configuration information for mobility including, but not limited to, the configuration information for selective activation of cell groups as an example, when a failure occurs at the terminal device, if the indication information is used for indicating that failure recovery can be performed based on the configuration information for selective activation of cell groups, and the terminal device selects a cell in a to-be-activated cell group of the configuration information for selective activation of the cell groups when selecting a cell for failure recovery, the terminal device performs failure recovery processing based on the configuration information of the to-be-activated cell group.

In the embodiments of the present application, after determining whether failure recovery is allowed to be performed based on the configuration information for mobility, the terminal device may further perform the following processes: in response to failure recovery being allowed to be performed based on the configuration information for mobility, performing failure recovery based on the configuration information for mobility; and/or, in response to failure recovery not being allowed to be performed based on the configuration information for mobility, performing failure recovery in a manner other than the one in which failure recovery is performed based on the configuration information for mobility.

In one example, in response to failure recovery being allowed to be performed based on the configuration information for mobility, failure recovery is performed based on the configuration information for mobility, and the indication information is processed based on a failure result.

In another example, in response to failure recovery not being allowed to be performed based on the configuration information for mobility, the failure recovery is performed in a manner other than the manner based on the configuration information for mobility. When it is determined that failure recovery cannot be performed based on the configuration information for mobility, it is indicated that failure recovery is not allowed to be performed based on the configuration information for mobility.

It should be noted that steps S401 and S402 are independent steps, and after step S401, step S402 may not be performed.

According to the indication method for failure recovery in the embodiments of the present application, the terminal device can determine the indication information based on the reception status of the first configuration information from the network device; and based on the indication information, it can determine whether the failure recovery can be performed based on the configuration information for mobility, and thus perform the failure recovery processing. This enables the restriction of multiple attempts by the terminal device to cell group activation for failure recovery, thus improving the speed of failure recovery.

It should be noted that these possible implementations described above may be performed individually or in combination, and the embodiments of the present application do not limit this.

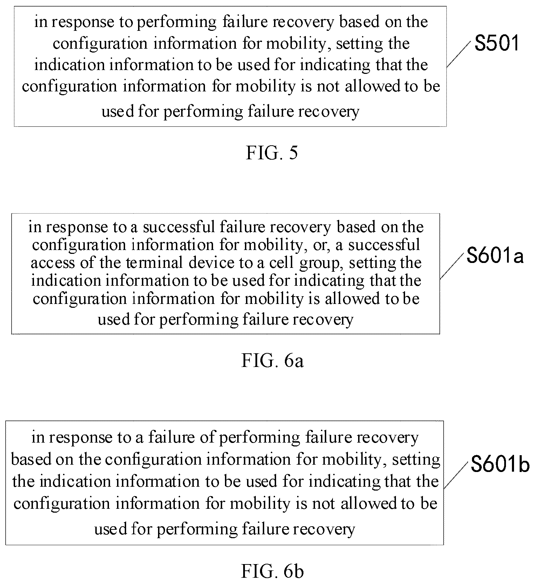

Referring to FIG. 5, FIG. 5 is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

In one implementation, in response to performing failure recovery based on the configuration information for mobility, the configuration information for mobility is not deleted. The configuration information for mobility includes, but is not limited to, at least one of: configuration information for selective activation of cell groups, or configuration information for mobility management based on conditions.

In the embodiments of the present application, the first information may be indication information. In one example, whether failure recovery can be performed based on the configuration information for mobility may be determined according to the presence or absence of the indication information. In another example, whether failure recovery can be performed based on the configuration information for mobility may be determined according to a value of the indication information.

Based on the first information in the above two examples, the method may include, but is not limited to, the following steps, as shown in FIG. 5.

Step S501, in response to performing failure recovery based on the configuration information for mobility, setting the indication information to be used for indicating that the configuration information for mobility is not allowed to be used for performing failure recovery.

According to the embodiments of the present application, in one example, in the case where whether failure recovery can be performed based on the configuration information for mobility is determined according to the presence or absence of the indication information, in response to performing failure recovery based on the configuration information for mobility, the terminal device may delete the indication information contained in a variable, for indicating that the configuration information for mobility cannot be used for performing failure recovery.

In another example, in the case where whether failure recovery can be performed based on the configuration information for mobility is determined according to a value of the indication information, in response to performing failure recovery based on the configuration information for mobility, the terminal device may update the value of the indication information to a second value, for indicating that the configuration information for mobility cannot be used for performing failure recovery.

Taking the configuration information for mobility including, but not limited to, the configuration information for selective activation of cell groups as an example, after the terminal device performs failure recovery processing based on the configuration information for selective activation of cell groups, the terminal device may update the indication information, i.e., set the indication information to be used for indicating that the configuration information for mobility cannot be used for performing failure recovery.

In the embodiments of the present application, after step S501, the terminal device may further determine, based on the result of the failure recovery processing, whether or not to carry out update processing for the indication information, and determine a method of update processing for the indication information. In one example, if the failure recovery fails, it is determined that no update processing is performed on the indication information; if the failure recovery succeeds, the indication information is set to be used for indicating that the failure recovery can be performed using the configuration information for mobility.

In some embodiments, if the failure recovery is successful, the terminal device may also first determine whether the indication information at this time is used for indicating that the configuration information for mobility can be used for performing failure recovery. If the indication information at this time is used for indicating that the configuration information for mobility can be used for performing failure recovery, no update processing will be performed for the indication information. If the indication information at this time is used for indicating that the configuration information for mobility cannot be used for performing failure recovery, the indication information is set to be used for indicating that the configuration information for mobility can be used for performing failure recovery.

According to the indication method for failure recovery in the embodiments of the present application, the terminal device can set, in response to performing failure recovery based on the configuration information for mobility, the indication information to be used for indicating that the configuration information for mobility cannot be used for performing failure recovery. This enables the restriction of multiple attempts by the terminal device to cell group activation for failure recovery, thus improving the speed of failure recovery.

It should be noted that these possible implementations described above may be performed individually or in combination, and the embodiments of the present application do not limit this.

Referring to FIG. 6a, FIG. 6a is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

In one implementation, in response to performing failure recovery based on the configuration information for mobility, the configuration information for mobility is not deleted. The configuration information for mobility includes, but is not limited to, at least one of: configuration information for selective activation of cell groups, or configuration information for mobility management based on conditions.

In the embodiments of the present application, the first information may be indication information. In one example, whether failure recovery can be performed based on the configuration information for mobility may be determined according to the presence or absence of the indication information. In another example, whether failure recovery can be performed based on the configuration information for mobility may be determined according to a value of the indication information.

Based on the first information in the above two examples, the method may include, but is not limited to, the following steps, as shown in FIG. 6a.

Step S601a, in response to a successful failure recovery based on the configuration information for mobility, or, a successful access of the terminal device to a cell group, setting the indication information to be used for indicating that the configuration information for mobility is allowed to be used for performing failure recovery.

According to the embodiments of the present application, in one example, in the case where whether failure recovery can be performed based on the configuration information for mobility is determined according to the presence or absence of the indication information, in response to a successful failure recovery based on the configuration information for mobility, or a successful access of the terminal device to a cell group, the terminal device may set the indication information, i.e., include the indication information in a variable, for indicating that the configuration information for mobility can be used for performing failure recovery.

In another example, in the case where whether failure recovery can be performed based on the configuration information for mobility is determined according to a value of the indication information, in response to a successful failure recovery based on the configuration information for mobility, or a successful access of the terminal device to a cell group, the terminal device may update the value of the indication information to a first value, for indicating that the configuration information for mobility can be used for performing failure recovery.

Taking the configuration information for mobility including, but not limited to, the configuration information for selective activation of cell groups as an example, when the terminal device successfully performs failure recovery based on the configuration information for mobility or, alternatively, the terminal device successfully accesses a cell group, the indication information is processed for updating the indication information, i.e., the indication information is set to be used for indicating that the configuration information for mobility can be used for performing failure recovery.

In some embodiments, in response to a successful failure recovery based on the configuration information for mobility, the terminal device may set the indication information to be used for indicating that the configuration information for mobility can be used for performing failure recovery. It should be noted that in these embodiments, before performing failure recovery based on the configuration information for mobility, the indication information is used for indicating that the configuration information for mobility can be used for failure recovery. This allows the failure recovery to be carried out based on the configuration information for mobility, leading to a successful outcome of the failure recovery.

In other embodiments, in response to a successful access of the terminal device to a cell group, the terminal device may set the indication information to be used for indicating that the configuration information for mobility can be used for performing failure recovery.

In these embodiments, before the terminal device accesses a cell group, the indication information is used for indicating that the configuration information for mobility can be used for performing failure recovery, or the indication information is used for indicating that failure recovery can be performed without using the configuration information for mobility. If the indication information is used for indicating that the configuration information for mobility can be used for failure recovery, it is possible that the cell selected by the terminal device does not exist in any of the candidate cell groups corresponding to the configuration information for mobility. In this case, other methods need to be adopted for failure recovery to access the cell group. If the indication information is used for indicating that the configuration information for mobility cannot be used for failure recovery, the terminal device can adopt other methods for failure recovery to access the cell group. These other methods may include, for example, using a re-establishment procedure for failure recovery.

In the indication method for failure recovery of embodiments of the present application, the terminal device can respond to a successful failure recovery based on the configuration information for mobility, or, a successful access of the terminal device to a cell group, and set the indication information to be used for indicating that the configuration information for mobility can be used for performing failure recovery. This enables the restriction of multiple attempts by the terminal device to cell group activation for failure recovery, thus improving the speed of failure recovery.

It should be noted that these possible implementations described above may be performed individually or in combination, and the embodiments of the present application do not limit this.

Referring to FIG. 6b, FIG. 6b is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

In one implementation, in response to performing failure recovery based on the configuration information for mobility, the configuration information for mobility is not deleted. The configuration information for mobility includes, but is not limited to, at least one of: configuration information for selective activation of cell groups, or configuration information for mobility management based on conditions.

In the embodiments of the present application, the first information may be indication information. In one example, whether failure recovery can be performed based on the configuration information for mobility may be determined according to the presence or absence of the indication information. In another example, whether failure recovery can be performed based on the configuration information for mobility may be determined according to a value of the indication information.

Based on the first information in the above two examples, the method may include, but is not limited to, the following steps, as shown in FIG. 6b.

Step S601b, in response to a failure of performing failure recovery based on the configuration information for mobility, setting the indication information to be used for indicating that the configuration information for mobility is not allowed to be used for performing failure recovery.

According to the embodiments of the present application, in one example, in the case where whether failure recovery can be performed based on the configuration information for mobility is determined according to the presence or absence of the indication information, in response to a failure of performing failure recovery based on the configuration information for mobility, the terminal device may delete the indication information contained in the variable, for indicating that the configuration information for mobility cannot be used for performing failure recovery.

In another example, in the case where whether failure recovery can be performed based on the configuration information for mobility is determined according to a value of the indication information, in response to a failure of performing failure recovery based on the configuration information for mobility, the terminal device may update the value of the indication information to a second value, for indicating that the configuration information for mobility cannot be used for performing failure recovery.

Taking the configuration information for mobility including, but not limited to, the configuration information for selective activation of cell groups as an example, the terminal device may update the indication information after failing to carry out failure recovery based on the configuration information for selective activation of cell groups, i.e., the indication information is set to be used for indicating that the configuration information for mobility cannot be used for performing failure recovery.

In some embodiments, if the failure recovery fails, the terminal device may also first determine whether the indication information at this time is used for indicating that the configuration information for mobility can be used for performing failure recovery. If the indication information at this time is used for indicating that the configuration information for mobility can be used for performing failure recovery, update processing is performed for the indication information, i.e., the indication information is set to be used for indicating that the configuration information for mobility can be used for performing failure recovery. If the indication information at this time is used for indicating that the configuration information for mobility cannot be used for performing failure recovery, update processing will not be performed for the indication information.

According to the indication method for failure recovery of embodiments of the present application, the terminal device can respond to a failure of performing failure recovery based on the configuration information for mobility, and set the indication information to be used for indicating that the configuration information for mobility cannot be used for performing failure recovery. This enables the restriction of multiple attempts by the terminal device to cell group activation for failure recovery, thus improving the speed of failure recovery.

It should be noted that these possible implementations described above may be performed individually or in combination, and the embodiments of the present application do not limit this.

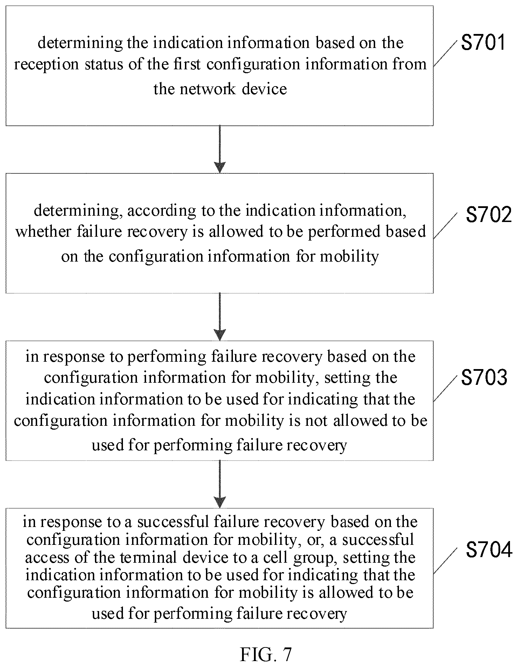

Referring to FIG. 7, FIG. 7 is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

In the embodiments of the present application, the first information may be indication information. In one example, whether failure recovery can be performed based on the configuration information for mobility may be determined according to the presence or absence of the indication information. In another example, whether failure recovery can be performed based on the configuration information for mobility may be determined according to a value of the indication information.

Based on the first information in the above two examples, the method may include, but is not limited to, the following steps, as shown in FIG. 7.

Step S701, determining the indication information based on the reception status of the first configuration information from the network device.

In the embodiments of the present application, the reception status of the first configuration information from the network device includes, for example, that the first configuration information from the network device is received, or, the first configuration information from the network device is not received.

Step S702, determining, according to the indication information, whether failure recovery is allowed to be performed based on the configuration information for mobility.

According to the embodiments of the present application, in one example, in response to a presence of the indication information, the terminal device determines that failure recovery can be performed based on the configuration information for mobility; or, in response to an absence of the indication information, it is determined that failure recovery cannot be performed based on the configuration information for mobility.

In another example, in response to the indication information having a first value, it is determined that failure recovery can be performed based on the configuration information for mobility; or, in response to the indication information having a second value other than the first value, it is determined that failure recovery cannot be performed based on the configuration information for mobility.

Step S703, in response to performing failure recovery based on the configuration information for mobility, setting the indication information to be used for indicating that the configuration information for mobility is not allowed to be used for performing failure recovery.

Step S704, in response to a successful failure recovery based on the configuration information for mobility, or, a successful access of the terminal device to a cell group, setting the indication information to be used for indicating that the configuration information for mobility is allowed to be used for performing failure recovery.

Additionally, if the failure recovery based on the configuration information for mobility fails, no further action is taken. It should be noted that steps S703 and S704 are independent steps. After step S703, step S704 may not be performed. For example, if the failure recovery based on the configuration information for mobility fails, step S704 is not performed. Similarly, step S704 is not necessarily preceded by step S703. For example, the step preceding step S704 may be the step where the terminal device accesses a cell group.

It should be noted that the detailed description of the steps in the embodiments of the present application can be referred to the detailed description of the corresponding steps in the embodiments of FIGS. 4 to 6, which will not be described in detail herein.

For example, the first information may include, but is not limited to, a parameter contained (or defined) in a Var variable of the terminal device. The Var variable of the terminal device may be a Var variable storing configuration information of the "mobility management process" of the network configuration.

In some embodiments, the first information may be indication information (e.g., 1bit with a type of ENUMERATED {true}).

In other embodiments, the first information may be counting information (parameter type: integer). The Var variable contains an indication based on which the terminal device determines whether failure recovery can be performed through the "mobility management process".

Correspondingly, based on the first information in the above examples, in some embodiments, when the terminal device receives the "mobility management process" configuration sent by the network device, if the network device configures that the terminal device can use the "mobility management process" for failure recovery, this indication information is set to indicate that the configuration information of the "mobility management process" can be used for failure recovery.

For example, the terminal device sets the value of the indication information to "true/1". Another example is to include this indication information in a corresponding Var variable.

The network configures the terminal to be able to use the "mobility management process" for failure recovery, which can determined through information (such as the "attemptCondReconfig" parameter) sent to the UE by the network.

In other embodiments, when the terminal device receives the "mobility management process" configuration from the network device, if the network device configures the terminal device to not use the "mobility management process" for failure recovery, the indication information is set to indicate that the configuration information of the "mobility management process" cannot be used for failure recovery.

For example, the value of this indication information is set to "false". Another example is to set the corresponding Var variable to not contain this indication information.

In other embodiments, when the terminal device receives the "mobility management process" configuration from the network device, the indication information is set by default to indicate that the configuration information of the "mobility management process" can or cannot be used for failure recovery.

Correspondingly, based on the first information in the above examples, when a failure occurs at the terminal device, if the indication information indicates that the configuration information of the "mobility management process" can be used for failure recovery, the terminal device can perform failure recovery through the "mobility management process".

In some embodiments, for selective activation of cell groups, when a failure occurs at the terminal device, if the indication information indicates that the configuration information for "selective activation of cell groups" can be used for failure recovery and the terminal device selects a cell (PCell or PSCell) from a "to-be-activated cell group" for failure recovery, the cell group configuration information of the corresponding "to-be-activated cell group" is applied.

For example, if the corresponding parameter of the indication information is set to "true" and the terminal device selects a cell (PCell or PSCell) from a "to-be-activated cell group" for failure recovery, the cell group configuration information of the corresponding "to-be-activated cell group" is applied.

For another example, if the corresponding Var variable contains this indication information and the terminal device selects a cell (PCell or PSCell) from a "to-be-activated cell group" for failure recovery, the cell group configuration information of the corresponding "to-be-activated cell group" is applied.

Correspondingly, based on the first information in the above examples, when the terminal device performs failure recovery through the "mobility management process" using the corresponding configuration information, the indication information is updated to indicate that the configuration information of the "mobility management process" cannot be used for failure recovery.

For example, the value of the indication information is set to "false/0". Another example is to remove this indication information from the corresponding Var variable

In some embodiments, for selective activation of cell groups, when the terminal device performs selective activation of cell groups, activates the corresponding "to-be-activated cell group", and applies the cell group configuration information of the corresponding "to-be-activated cell group" for failure recovery, this indication information is updated to indicate that the configuration information of the "selective activation of cell groups" cannot be used for performing failure recovery. This indicates that if a subsequent failure occurs, the configuration information of the "selective activation of cell groups" cannot be used for performing failure recovery.

Correspondingly, based on the first information in the above examples, when the terminal device successfully performs failure recovery through the "mobility management process" and successfully accesses the corresponding cell, it is indicated that the configuration information of the "mobility management process" can be used for performing failure recovery.

For example, the value of the indication information is set to "true". Another example is to include this indication information in the corresponding Var variable.

In some embodiments, for selective activation of cell groups, when the terminal device successfully accesses the "to-be-activated cell group" used for failure recovery or the terminal device successfully connects to a serving cell, it is indicated that the configuration information of the "selective activation of cell groups" can be used for performing failure recovery. Alternatively, when the terminal device successfully accesses the "to-be-activated cell group" used for failure recovery or the terminal device successfully connects to a serving cell, it is indicated that the configuration information of the "mobility management process" can be used for performing failure recovery.

Correspondingly, based on the first information in the above examples, when the terminal device selects a cell to be accessed for failure recovery in order to perform failure recovery, the selection method includes, but is not limited to: (1) during a re-establishment procedure, performing cell selection to select the cell; (2) for "selective activation of cell groups", selecting the cell for failure recovery from the PCell or PSCell corresponding to the "to-be-activated cell group" of the network configuration according to the network configuration, protocol specification or UE implementation.

For "selective activation of cell groups", during the re-establishment procedure, the method for determining the cell to be accessed through cell selection involves: (1) When the terminal device experiences a failure, it initiates the re-establishment procedure, starts timer T311, and performs cell selection to choose an appropriate cell. If the indication information indicates that the configuration information of the "selective activation of cell groups" can be used for performing failure recovery, and the selected cell is one of the cells in the "to-be-activated cell group", the "to-be-activated cell group" is activated. The activation of this "to-be-activated cell group" includes, but is not limited to, applying the corresponding cell group configuration information of this "to-be-activated cell group" from the stored configuration information for the "selective activation of cell groups". (2) If the RRCReconfiguration (i.e., the corresponding cell group configuration information of the to-be-activated cell group) is applied after cell selection and cell group activation are performed during the operation of the timer T311, the indication information is updated to indicate that the configuration information for the "selective activation of cell groups" cannot be used for failure recovery.

According to the indication method for failure recovery in the embodiments of the present application, the terminal device can determine indication information based on the reception status of the first configuration information from the network device; determine, according to the indication information, whether failure recovery can be performed based on the configuration information for mobility; in response to performing failure recovery based on the configuration information for mobility, set the indication information to be used for indicating that the configuration information for mobility cannot be used for failure recovery; in response to performing failure recovery based on the configuration information for mobility, set the indication information to be used for indicating that the configuration information for mobility cannot be used for failure recovery; in response to a successful failure recovery based on the configuration information for mobility, or, a successful access of the terminal device to a cell group, set the indication information to be used for indicating that the configuration information for mobility can be used for performing failure recovery, and thereby carry out the failure recovery processing. This enables the restriction of multiple attempts by the terminal device to cell group activation for failure recovery, thus improving the speed of failure recovery.

It should be noted that these possible implementations described above may be performed individually or in combination, and the embodiments of the present application do not limit this.

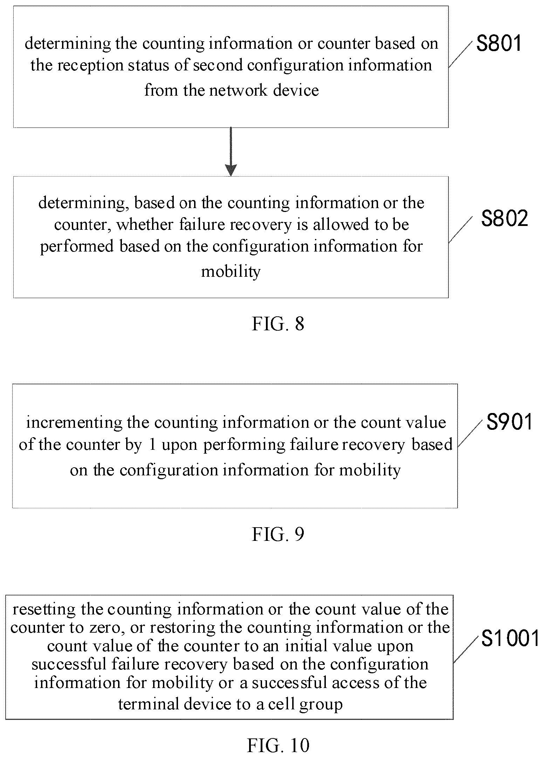

Referring to FIG. 8, FIG. 8 is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

In one implementation, in response to performing failure recovery based on the configuration information for mobility, the configuration information for mobility is not deleted. The configuration information for mobility includes, but is not limited to, at least one of: configuration information for selective activation of cell groups, or configuration information for mobility management based on conditions.

In the embodiments of the present application, the first information may be counting information or a count value of a counter. In the case where the first information is the counting information, whether failure recovery can be performed based on the configuration information for mobility may be determined according to the presence or absence of the counting information, or depending on whether the counting information is greater than a first count value. In the case where the first information is the count value of the counter, whether failure recovery can be performed based on the configuration information for mobility may be determined depending on whether the count value has reached a maximum value of the counter.

Based on the first information in the above examples, the method may include, but is not limited to, the following steps, as shown in FIG. 8.

Step S801, determining the counting information or counter based on the reception status of second configuration information from the network device.

In the embodiments of the present application, the reception status of the second configuration information from the network device includes, for example, that the second configuration information from the network device is received, or, the second configuration information from the network device is not received.

In the case where the terminal device receives the second configuration information from the network device, in one example, the second configuration information indicates that the configuration information for mobility can be used for performing failure recovery. That is, the second configuration information may indicate the first count value or the maximum value of the counter, and accordingly, the terminal device sets the counting information or the counter to be used for indicating that the configuration information for mobility can be used for performing failure recovery. For example, when the first information is the counting information, the terminal device can set the counting information for indicating that the configuration information for mobility can be used for performing failure recovery. For another example, when the first information is the count value of the counter, the terminal device can set the counter for indicating that the configuration information for mobility can be used for performing failure recovery.

In another example, if the second configuration information indicates that the configuration information for mobility cannot be used, the terminal device does not set the counting information, or, alternatively, set the count value of the counter to a maximum value of the counter, for indicating that the configuration information for mobility cannot be used for performing failure recovery. For example, in the case where the first information is the counting information, the terminal device may not set the counting information, for indicating that the configuration information for mobility cannot be used for performing failure recovery. For another example, in the case where the first information is the count value of the counter, the terminal device may set the count value of the counter to a maximum value of the counter, for indicating that the configuration information for mobility cannot be used for performing failure recovery.

In the case where the terminal device does not receive the second configuration information from the network device, in one example, the terminal device may set the counting information or the counter for indicating that the configuration information for mobility can be used. For example, in the case where the first information is the counting information, the terminal device may set the counting information for indicating that the configuration information for mobility can be used for performing failure recovery. For another example, in the case where the first information is the count value of the counter, the terminal device may set the counter for indicating that the configuration information for mobility can be used for performing failure recovery.

In another example, the terminal device may not set the counting information, or, alternatively, set the count value of the counter to a maximum value of the counter for indicating that the configuration information for mobility cannot be used for performing failure recovery. For example, when the first information is the counting information, the terminal device may not set the counting information for indicating that the configuration information for mobility cannot be used for performing failure recovery. For another example, when the first information is the count value of the counter, the terminal device may set the count value of the counter to a maximum value of the counter for indicating that the configuration information for mobility cannot be used for performing failure recovery.

Step S802, determining, based on the counting information or the counter, whether failure recovery is allowed to be performed based on the configuration information for mobility.

According to the embodiments of the present application, in one example, in response to a presence of the counting information and the counting information having a value less than the first count value, it is determined that the configuration information for mobility can be used for performing failure recovery; or, in response to an absence of the counting information, or, the counting information having a value greater than or equal to the first count value, it is determined that the configuration information for mobility cannot be used for performing failure recovery.

In another example, in response to the count value not reaching a maximum value of the counter, it is determined that the configuration information for mobility can be used for performing failure recovery; or, in response to the count value reaching the maximum value, it is determined that the configuration information for mobility cannot be used for performing failure recovery.

In one example, taking the configuration information for mobility including the configuration information for selective activation of cell groups as an example, when a failure occurs at the terminal device, if the value of the counting information is less than a first counting threshold and the cell selected by the terminal device for failure recovery is a cell in the to-be-activated cell group, the failure recovery processing is performed based on the configuration information of this to-be-activated cell group.

In the embodiments of the present application, after determining whether failure recovery can be performed based on the configuration information for mobility, the terminal device may further execute the following processes: in response to failure recovery being allowed to be performed based on the configuration information for mobility, performing failure recovery based on the configuration information for mobility; and/or, in response to failure recovery not being allowed to be performed based on the configuration information for mobility, performing failure recovery in a manner other than the one in which failure recovery is performed based on the configuration information for mobility.

In one example, in response to failure recovery being allowed to be performed based on the configuration information for mobility, the failure recovery is performed based on the configuration information for mobility, and the counting information is processed based on a failure result.

In another example, in response to failure recovery not being allowed to be performed based on the configuration information for mobility, the failure recovery is performed in a manner other than the manner based on the configuration information for mobility. When it is determined that failure recovery cannot be performed based on the configuration information for mobility, it is indicated that failure recovery based on the configuration information for mobility is not allowed.

It should be noted that steps S801 and S802 are independent steps, and after step S801, step S802 may not be performed.

According to the indication method for failure recovery of the embodiments of the present application, the terminal device can determine the counting information or the counter based on the reception status of the second configuration information from the network device; and determine, based on the counting information or the counter, whether failure recovery can be performed based on the configuration information for mobility, and then perform the failure recovery processing. This enables the restriction of multiple attempts by the terminal device to cell group activation for failure recovery, thus improving the speed of failure recovery.

It should be noted that these possible implementations described above may be performed individually or in combination, and the embodiments of the present application do not limit this.

Referring to FIG. 9, FIG. 9 is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

In one implementation, in response to performing failure recovery based on the configuration information for mobility, the configuration information for mobility is not deleted. The configuration information for mobility includes, but is not limited to, at least one of: configuration information for selective activation of cell groups, or configuration information for mobility management based on conditions.

In the embodiments of the present application, the first information may be counting information or a count value of a counter. In the case where the first information is the counting information, whether failure recovery can be performed based on the configuration information for mobility may be determined according to the presence or absence of the counting information, or depending on whether the counting information is greater than a first count value. In the case where the first information is the count value of the counter, whether failure recovery can be performed based on the configuration information for mobility may be determined depending on whether the count value has reached a maximum value of the counter.

Based on the first information in the above examples, the method may include, but is not limited to, the following steps, as shown in FIG. 9.

Step S901, incrementing the counting information or the count value of the counter by 1 upon performing failure recovery based on the configuration information for mobility.

According to the embodiments of the present application, in one example, the counting information is incremented by 1 upon performing failure recovery based on the configuration information for mobility. In another example, the count value of the counter is incremented by 1 upon performing failure recovery based on the configuration information for mobility.

Taking the configuration information for mobility including, but not limited to, the configuration information for selective activation of cell groups as an example, the terminal device, after performing failure recovery processing based on the configuration information for selective activation of cell groups, may increment the counting information by 1, or increment the count value of the counter by 1.

In the embodiments of the present application, after step S901, the terminal device may also update the counting information or the count value of the counter based on the result of the failure recovery processing. In one example, if the failure recovery fails, the counting information or the count value of the counter is not updated; if the failure recovery succeeds, the counting information or the count value of the counter is reset to zero, or restored to its initial value.

According to the indication method for failure recovery of the embodiments of the present application, the terminal device can increment the counting information or the count value of the counter upon performing failure recovery based on the configuration information for mobility. This enables the restriction of multiple attempts by the terminal device to cell group activation for failure recovery, thus improving the speed of failure recovery.

It should be noted that these possible implementations described above may be performed individually or in combination, and the embodiments of the present application do not limit this.

Referring to FIG. 10, FIG. 10 is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

In one implementation, in response to performing failure recovery based on the configuration information for mobility, the configuration information for mobility is not deleted. The configuration information for mobility includes, but is not limited to, at least one of: configuration information for selective activation of cell groups, or configuration information for mobility management based on conditions.

In the embodiments of the present application, the first information may be counting information or a count value of a counter. In the case where the first information is the counting information, whether failure recovery can be performed based on the configuration information for mobility may be determined according to the presence or absence of the counting information, or depending on whether the counting information is greater than a first count value. In the case where the first information is the count value of the counter, whether failure recovery can be performed based on the configuration information for mobility may be determined depending on whether the count value has reached a maximum value of the counter.

Based on the first information in the above examples, the method may include, but is not limited to, the following steps, as shown in FIG. 10.

Step S1001, resetting the counting information or the count value of the counter to zero, or restoring the counting information or the count value of the counter to an initial value upon successful failure recovery based on the configuration information for mobility or a successful access of the terminal device to a cell group.

According to the embodiments of the present application, in one example, upon successful failure recovery based on the configuration information for mobility, or upon a successful access of the terminal device to a cell group, the counting information is reset to zero or restored to its initial value. The initial value of the counting information can be set by the terminal device or specified by the protocol.

In another example, upon successful failure recovery based on the configuration information for mobility, or upon a successful access of the terminal device to a cell group, the count value of the counter is reset to zero or restored to its initial value. The initial value of the count value of the counter can be set by the terminal device or specified by the protocol.

In some embodiments, upon successful failure recovery based on the configuration information for mobility, the terminal device may reset the counting information to zero or restore the counting information to its initial value. It should be noted that in these embodiments, before performing failure recovery based on the configuration information for mobility, the counting information exists and is less than a first count value, or alternatively, the count value of the counter has not reached its maximum value, indicating that the configuration information for mobility can be used for failure recovery. Only then can failure recovery be performed based on the configuration information for mobility, leading to a successful outcome for failure recovery.

In other embodiments, upon a successful access of the terminal device to a cell group, the terminal device can reset the counting information to zero or restore the counting information to its initial value.

In these embodiments, before the terminal device accesses the cell group, the counting information, or the counting value of the counter, indicates that the configuration information for mobility can be used for failure recovery, or is used for indicating that failure recovery can be performed without using the configuration information for mobility. In the case of indicating that the configuration information for mobility can be used for failure recovery, it is possible that the cell selected by the terminal device does not exist in any of the candidate cell groups corresponding to the configuration information for mobility, and then failure recovery by other means is required to access the cell group. In the case where it is indicated that failure recovery cannot be performed using the configuration information for mobility, the terminal device may use other means for failure recovery to access the cell group. An example of the other means is using a re-establishment procedure for failure recovery.

According to the indication method for failure recovery of the embodiments of the present application, the terminal device can reset the counting information or the count value of the counter to zero, or restore the counting information or the count value of the counter to an initial value upon successful failure recovery based on the configuration information for mobility or a successful access of the terminal device to a cell group. This enables the restriction of multiple attempts by the terminal device to cell group activation for failure recovery, thus improving the speed of failure recovery.

It should be noted that these possible implementations described above may be performed individually or in combination, and the embodiments of the present application do not limit this.

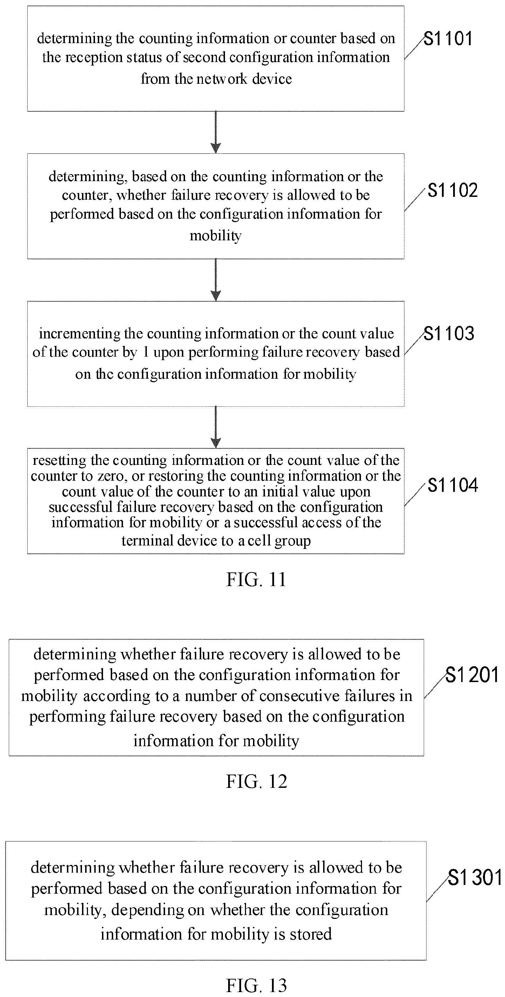

Referring to FIG. 11, FIG. 11 is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

In one implementation, in response to performing failure recovery based on the configuration information for mobility, the configuration information for mobility is not deleted. The configuration information for mobility includes, but is not limited to, at least one of: configuration information for selective activation of cell groups, or configuration information for mobility management based on conditions.

In the embodiments of the present application, the first information may be counting information or a count value of a counter. In the case where the first information is the counting information, whether failure recovery can be performed based on the configuration information for mobility may be determined according to the presence or absence of the counting information, or depending on whether the counting information is greater than a first count value. In the case where the first information is the count value of the counter, whether failure recovery can be performed based on the configuration information for mobility may be determined depending on whether the count value has reached a maximum value of the counter.

Based on the first information in the above examples, the method may include, but is not limited to, the following steps, as shown in FIG. 11.

Step S1101, determining the counting information or counter based on the reception status of second configuration information from the network device.

In the embodiments of the present application, the reception status of the second configuration information from the network device includes, for example, that the second configuration information from the network device is received, or, the second configuration information from the network device is not received.

Step S1102, determining, based on the counting information or the counter, whether failure recovery is allowed to be performed based on the configuration information for mobility.

Step S1103, incrementing the counting information or the count value of the counter by 1 upon performing failure recovery based on the configuration information for mobility.

According to the embodiments of the present application, in one example, the counting information is incremented by 1 upon performing failure recovery based on the configuration information for mobility. In another example, the count value of the counter is incremented by 1 upon performing failure recovery based on the configuration information for mobility.

Step S1104, resetting the counting information or the count value of the counter to zero, or restoring the counting information or the count value of the counter to an initial value upon successful failure recovery based on the configuration information for mobility or a successful access of the terminal device to a cell group.

Additionally, if the failure recovery based on the configuration information for mobility fails, no further action is taken. It should be noted that steps S1103 and S1104 are independent steps. After step S1103, step S1104 may not be performed. For example, if the failure recovery based on the configuration information for mobility fails, step S 1104 is not performed. Similarly, step S1104 is not necessarily preceded by step S 1103. For example, the step preceding step S1104 may be the step where the terminal device accesses a cell group.

It should be noted that the detailed description of the steps in the embodiments of the present application can be referred to the detailed description of the corresponding steps in the embodiments of FIGS. 8 to 10, which will not be described in detail herein.

For example, the maximum number of times that a terminal device can attempt failure recovery through the "mobility management process" after a failure occurs is limited to m.

In some embodiments, when the terminal device receives a "mobility management process" configuration sent by the network device, if the network device configures the terminal device to have a maximum number of m attempts for failure recovery through the "mobility management process", the counting information defined in the Var variable is set to an initial value.

For example, the counting information is included in the Var variable, and this counting information is set to 0.

In other embodiments, in the case where the terminal device receives a "mobility management process" configuration sent by the network device, the network device may configure the terminal device to not use the "mobility management process" for failure recovery.

For example, the corresponding Var variable is set to not contain this counting information.

In other embodiments, when the terminal device receives a "mobility management process" configuration sent by the network device, this configuration is set to contain or not contain the counting information by default.

Correspondingly, based on the premise that the first information in the above examples is the counting information, when a failure occurs at the terminal device, if the counting information is less than m, the terminal device can perform failure recovery through the "mobility management process".

In some embodiments, for selective activation of cell groups, when a failure occurs at the terminal device, if the counting information is less than m and the terminal device selects a cell (PCell or PSCell) in a "to-be-activated cell group" for failure recovery, cell group configuration information corresponding to the "to-be-activated cell group" is applied.

Correspondingly, based on the premise that the first information in the above examples is the counting information, when the terminal device performs failure recovery through the "mobility management process" and applies the corresponding configuration information for failure recovery, the counting information is incremented by 1.

In some embodiments, for selective activation of cell groups, when the terminal device activates the corresponding "to-be-activated cell group" and applies the cell group configuration information of the corresponding "to-be-activated cell group" for failure recovery, the counting information is incremented by 1.

Correspondingly, based on the premise that the first information in the above examples is the counting information, when the terminal device successfully performs failure recovery and accesses the corresponding cell, the counting information is set to an initial value of 0.

In some embodiments, for selective activation of cell groups, when the terminal device successfully accesses a "to-be-activated cell group" used for failure recovery or when the terminal device successfully connects to a serving cell, the counting information is set to an initial value of 0.

Correspondingly, on the basis of the first information in the above examples, during a re-establishment procedure, a method for determining the cell to be accessed through cell selection involves: (1) When the terminal device experiences a failure, it initiates the re-establishment procedure, starts timer T311, and performs cell selection to choose an appropriate cell. If the counting information is less than m and if the selected cell is one of cells in a "to-be-activated cell group", the activation of the "to-be-activated cell group" is performed. The activation of the "to-be-activated cell group" includes applying the corresponding cell group configuration information of this "to-be-activated cell group" from the stored configuration information for the "selective activation of cell groups". (2) If the RRCReconfiguration (i.e., the corresponding cell group configuration information of the to-be-activated cell group) is applied by performing cell selection and cell group activation during the operation of the timer T311, this counting information is incremented by 1.

For example, the network device configures the terminal device with a maximum number of attempts for failure recovery through the "mobility management process," represented by a counter. The value of this counter, Nx, is nm. For instance, Nx is of enumerated type, with possible values being ENUMERATED {n1, n2, n3, n4, n6, n8, n10, n20}.

In some embodiments, Nx is reset when the terminal device successfully accesses the cell used for failure recovery or the terminal device successfully connects to the serving cell.

In other embodiments, Nx is incremented when the terminal device performs failure recovery through the "mobility management process," and applies the corresponding configuration information for failure recovery.

In other embodiments, when Nx reaches a maximum value of m, the terminal device will subsequently not support failure recovery through the "mobility management process".

According to the indication method for failure recovery of the embodiments of the present application, the terminal device can determine counting information or a counter based on the reception status of second configuration information from the network device; determine, based on the counting information or the counter, whether failure recovery can be performed based on the configuration information for mobility; increment the counting information or the count value of the counter by 1 upon performing failure recovery based on the configuration information for mobility; reset the counting information or the count value of the counter to zero, or restore the counting information or the count value of the counter to an initial value upon successful failure recovery based on the configuration information for mobility or a successful access of the terminal device to a cell group. This enables the restriction of multiple attempts by the terminal device to cell group activation for failure recovery, thus improving the speed of failure recovery.

It should be noted that these possible implementations described above may be performed individually or in combination, and the embodiments of the present application do not limit this.

Referring to FIG. 12, FIG. 12 is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

As shown in FIG. 12, the method may include, but is not limited to, the following steps.

Step S1201, determining whether failure recovery is allowed to be performed based on the configuration information for mobility according to a number of consecutive failures in performing failure recovery based on the configuration information for mobility.

According to the embodiments of the present application, in one example, the terminal device determines that failure recovery is allowed to be performed based on the configuration information for mobility in response to the number of consecutive failures being less than a first number threshold. In another example, it is determined that failure recovery is not allowed to be performed based on the configuration information for mobility in response to the number of consecutive failures being greater than or equal to the first number threshold.

The first number threshold may be any numerical value, for example, it may be 1 or an integer greater than 1. In the case where the first number threshold is 1, if the number of consecutive failures of the terminal device in performing failure recovery based on the configuration information for mobility is 0, it is determined that failure recovery can be performed based on the configuration information for mobility. If the number of consecutive failures of the terminal device in performing failure recovery based on the configuration information for mobility is 1, it is determined that failure recovery cannot be performed based on the configuration information for mobility.

In the embodiments of the present application, the configuration information for mobility includes, but is not limited to, at least one of: configuration information for selective activation of cell groups, or configuration information for mobility management based on conditions.

The configuration information for selective activation of cell groups is, for example, configuration information for selective activation of master cell groups, or configuration information for selective activation of secondary cell groups, etc. The configuration information for mobility management based on conditions is, for example, configuration information for conditional handover (CHO), configuration information for conditional PSCell change (CPC), or configuration information for conditional PSCell addition (CPA), etc.

In the embodiments of the present application, the configuration information for mobility may be configured by the network device and stored in a variable of the terminal device. That is, the terminal device, after receiving a message containing the configuration information for mobility sent by the network device, may update the message to be stored in a variable of the terminal device.

In the embodiments of the present application, after step S1201, the terminal device may further determine whether to update the number of consecutive failures based on the result of the failure recovery processing. In one example, if the failure recovery fails, it is determined not to update the number of consecutive failures; if the failure recovery succeeds, the number of consecutive failures is reset to 0.

According to the indication method for failure recovery in the embodiments of the present application, the terminal device determines, according to a number of consecutive failures in performing failure recovery based on the configuration information for mobility, whether failure recovery can be performed based on the configuration information for mobility, and thus performs the failure recovery, thereby restricting the terminal device from attempting cell group activation multiple times to perform failure recovery, and improving the speed of failure recovery.

It should be noted that these possible implementations described above may be performed individually or in combination, and the embodiments of the present application do not limit this.

Referring to FIG. 13, FIG. 13 is a flowchart of another indication method for failure recovery provided by embodiments of the present application. This method may be performed by the terminal device in FIG. 1.

The indication method for failure recovery may be performed alone, or in combination with any of the embodiments or possible implementations of the embodiments in the present application, or in combination with any of the technical solutions in the related art.

In one implementation, in response to performing failure recovery based on the configuration information for mobility, the configuration information for mobility is deleted. The configuration information for mobility includes, but is not limited to, at least one of: configuration information for selective activation of cell groups, or configuration information for mobility management based on conditions.

As shown in FIG. 13, the method may include, but is not limited to, the following steps.

Step S1301, determining whether failure recovery is allowed to be performed based on the configuration information for mobility, depending on whether the configuration information for mobility is stored.

According to the embodiments of the present application, in one example, in response to the configuration information for mobility being stored, it is determined that failure recovery is allowed to be performed based on the configuration information for mobility. In another example, in response to the configuration information for mobility not being stored, determining that failure recovery is not allowed to be performed based on the configuration information for mobility.

In the embodiments of the present application, in the case where the terminal device has not performed failure recovery based on the configuration information for mobility, it may store the configuration information for mobility. If the terminal device performs failure recovery based on the configuration information for mobility and the recovery fails, it will delete the configuration information for mobility. Additionally, if the terminal device performs failure recovery based on the configuration information for mobility and the recovery succeeds, there is no need to delete the configuration information for mobility.

In the embodiments of the present application, the configuration information for mobility includes, but is not limited to, at least one of: configuration information for selective activation of cell groups, or configuration information for mobility management based on conditions.

The configuration information for selective activation of cell groups is, for example, configuration information for selective activation of master cell groups, or configuration information for selective activation of secondary cell groups, etc. The configuration information for mobility management based on conditions is, for example, configuration information for conditional handover (CHO), configuration information for conditional PSCell change (CPC), or configuration information for conditional PSCell addition (CPA), etc.

In the embodiments of the present application, the configuration information for mobility may be configured by the network device and stored in a variable of the terminal device. That is, the terminal device, after receiving a message containing the configuration information for mobility sent by the network device, may update the message to be stored in a variable of the terminal device.

According to the indication method for failure recovery of the embodiments of the present application, the terminal device determines whether failure recovery can be performed based on the configuration information for mobility, depending on whether the configuration information for mobility is stored, and thus performs failure recovery processing, thereby restricting the terminal device from attempting cell group activation multiple times to perform failure recovery, and improving the speed of failure recovery.

It should be noted that these possible implementations described above may be performed individually or in combination, and the embodiments of the present application do not limit this.

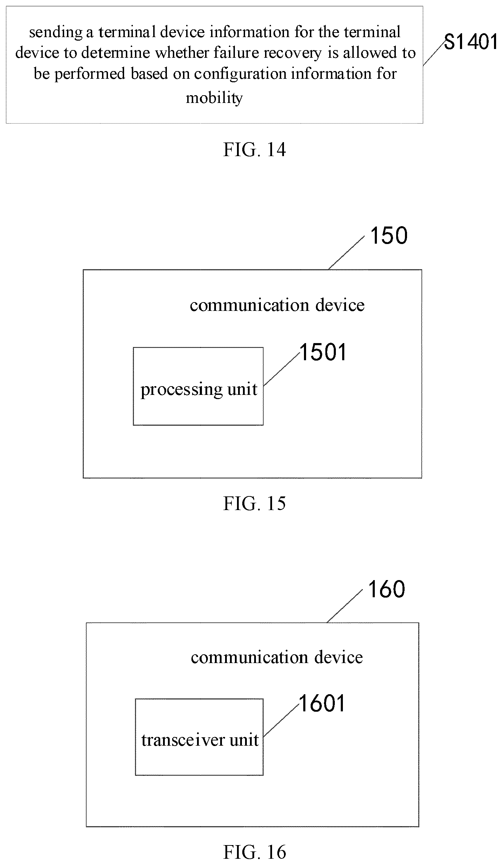

Referring to FIG. 14, FIG. 14 is a flowchart of another indication method for failure recovery provided by embodiments of the present application, which may be performed by the network device of FIG. 1. As shown in FIG. 14, the method may include, but is not limited to, the following steps.

Step S1401, sending a terminal device information for the terminal device to determine whether failure recovery is allowed to be performed based on configuration information for mobility.

In the embodiments of the present application, the configuration information for mobility includes, but is not limited to, at least one of: configuration information for selective activation of cell groups, or configuration information for mobility management based on conditions.

The configuration information for selective activation of cell groups is, for example, configuration information for selective activation of master cell groups, or configuration information for selective activation of secondary cell groups, etc. The configuration information for mobility management based on conditions is, for example, configuration information for conditional handover (CHO), configuration information for conditional PSCell change (CPC), or configuration information for conditional PSCell addition (CPA), etc.

In the embodiments of the present application, the configuration information for mobility may be configured by the network device and stored in a variable of the terminal device. That is, the terminal device, after receiving a message containing the configuration information for mobility sent by the network device, may update the message to be stored in a variable of the terminal device. The configuration information for mobility, which may be carried in an RRCReconfiguration message, is sent by the network device to the terminal device.

In one example, the configuration information for mobility may be a mobility configuration stored by the terminal device.

In one example, the terminal device, upon receiving a message containing a configuration for mobility sent by the network device, stores the configuration for mobility or updates a stored configuration for mobility based on this message sent by the network device.

In one example, the terminal device uses a terminal variable to store the configuration information for mobility. The terminal variable may be a UE variable, which may also be referred to as a Var variable.

In the embodiments of the present application, the configuration information for mobility stored by the terminal device may include a mobility configuration for a candidate master cell group, and/or a mobility configuration for a candidate secondary cell group.

For example, types of a "mobility management process" corresponding to the configuration information for mobility may include, but are not limited to, at least one of the following: (1) a mobility process based on conditional triggers (e.g., CHO, CPA, CPC); and (2) a selective activation process for cell groups. In other words, the "mobility management process" may include both of the above mentioned mobility management processes, or may be a specific one of them.

For example, a variable of the terminal device, i.e., the Var variable, may contain an instruction based on which the terminal device determines whether it can perform failure recovery through the "mobility management process".

In some embodiments, an indication parameter is defined in the Var variable. Based on a value of the indication parameter in the Var variable, or depending on whether the indication parameter is included, it is determined whether the UE can perform failure recovery through the "mobility management process".

In the above example, the terminal device can only perform failure recovery through the "mobility management process" when this indication parameter is "yes/can/allowed/available" or is included in the Var variable. When the terminal device executes the "mobility management process" for failure recovery, the value of this indication parameter is changed to "no/cannot/not allowed/not available" or the indication parameter is removed from the Var variable. Upon successful failure recovery by the terminal device, the value of this parameter is reset to "yes/can/allowed/available" or this parameter is included in the Var variable.

For example, the maximum number of times a terminal device is allowed to attempt failure recovery through the "mobility management process" after a failure occurs is limited to m.

In some embodiments, a count parameter is included in the corresponding Var variable. The terminal device determines whether it can perform failure recovery through the "mobility management process" by checking whether the value of this count parameter in the Var variable is less than the maximum number of attempts, m, configured by the network.

In the above example, the terminal device is only allowed to perform failure recovery through the "mobility management process" when this count parameter is less than the maximum number of attempts configured by the network. When the terminal device performs the "mobility management process" for failure recovery, this count parameter is incremented by one. Upon successful failure recovery by the terminal device, this count parameter is reset to 0.

For example, a counter is defined to indicate the maximum number of attempts allowed for failure recovery through the "mobility management process".

In the above example, when the counter reaches its maximum value, the terminal device will not support subsequent failure recovery through the "mobility management process". When the terminal device executes the "mobility management process" for failure recovery, the counter is incremented. Upon successful failure recovery by the terminal device, the counter is reset.

For example, for failure recovery through the "mobility management process," the terminal device does not delete the configuration information corresponding to the selective activation of cell groups that is stored in the terminal device when applying the configuration information (e.g., RRCReconfiguration) of the corresponding cell or cell group.

In the above example, it is possible to determine, based on the terminal device's implementation, that after failure recovery through the "mobility management process" fails (or after m consecutive failures in failure recovery), the terminal device is no longer allowed to continue using the "mobility management process" for failure recovery.

For example, for failure recovery through the "mobility management process," the terminal device deletes the configuration information corresponding to the selective activation of cell groups that is stored in the terminal device when applying the configuration information (e.g., RRCReconfiguration) of the corresponding cell or cell group.

According to the embodiments of the present application, in one example, the network device may send first configuration information to a terminal device, the first configuration information indicating that the configuration information for mobility can be used for performing failure recovery, or, alternatively, indicating that the configuration information for mobility cannot be used for performing failure recovery.

In another example, the network device may send second configuration information to the terminal device. The second configuration information indicates a first count value or a maximum value of a counter. Alternatively, the second configuration information indicates that the configuration information for mobility cannot be used for performing failure recovery.

In another example, the network device may send indication information to the terminal device for indicating the terminal device to delete the configuration information for mobility after a failure of performing failure recovery based on the configuration information for mobility.

According to the indication method for failure recovery of the embodiments of the present application, the network device sends information to the terminal device for the terminal device to determine whether failure recovery can be performed based on the configuration information for mobility, thereby restricting the terminal device from attempting cell group activation multiple times to perform failure recovery, and improving the speed of failure recovery.

It should be noted that these possible implementations described above may be performed individually or in combination, and the embodiments of the present application do not limit this.

In the above-described embodiments provided in the present application, the methods provided in the embodiments of the present application are described from the perspective of a network device and a terminal device, respectively. In order to realize each function in the methods provided in the above embodiments of the present application, the network device and the first terminal device may include a hardware structure, or a software module. Each of the aforementioned functions is realized in the form of a hardware structure, a software module, or a hardware structure plus a software module. A certain function of the aforementioned functions may be performed in the form of a hardware structure, a software module, or a hardware structure plus a software module.

Referring to FIG. 15, a schematic diagram of the structure of a communication device 150 provided by embodiments of the present application is shown. The device is applied to a terminal device, the device including: a processing unit 1501 configured to determine whether failure recovery is allowed to be performed based on configuration information for mobility.

In one embodiment, the processing unit 1501 is further configured to, in response to failure recovery being allowed to be performed based on the configuration information for mobility, perform failure recovery based on the configuration information for mobility; and/or in response to failure recovery not being allowed to be performed based on the configuration information for mobility, perform failure recovery in a manner other than the one in which failure recovery is performed based on the configuration information for mobility.

In one embodiment, the processing unit 1501 is further configured to, determine, according to first information, whether failure recovery is allowed to be performed based on the configuration information for mobility.

In one embodiment, the first information is stored by the terminal device and contained in a variable of the terminal device that is the same as, or different from a variable storing the configuration information for mobility.

In one embodiment, the first information is indication information; the processing unit 1501 is further configured to, in response to a presence of the indication information, determine that failure recovery is allowed to be performed based on the configuration information for mobility, or in response to an absence of the indication information, determine that failure recovery is not allowed to be performed based on the configuration information for mobility.

In one embodiment, the first information is indication information; the processing unit 1501 is further configured to, in response to the indication information having a first value, determine that failure recovery is allowed to be performed based on the configuration information for mobility, or in response to the indication information having a second value other than the first value, determine that failure recovery is not allowed to be performed based on the configuration information for mobility.

In one embodiment, the processing unit 1501 is further configured to, in response to first configuration information being received from a network device and indicating that the configuration information for mobility is allowed to be used for performing failure recovery, set the indication information to be used for indicating that the configuration information for mobility is allowed to be used for performing failure recovery, or in response to the first configuration information indicating that the configuration information for mobility is not allowed to be used for performing failure recovery, set the indication information to be used for indicating that the configuration information for mobility is not allowed to be used for performing failure recovery.

In one embodiment, the processing unit 1501 is further configured to, in response to first configuration information from a network device not being received, set the indication information to be used for indicating that the configuration information for mobility is allowed to be used for performing failure recovery, or in response to the first configuration information not being received, set the indication information to be used for indicating that the configuration information for mobility is not allowed to be used for performing failure recovery.

In one embodiment, the processing unit 1501 is further configured to, in response to performing failure recovery based on the configuration information for mobility, set the indication information to be used for indicating that the configuration information for mobility is not allowed to be used for performing failure recovery, or in response to a successful failure recovery based on the configuration information for mobility, or, a successful access of the terminal device to a cell group, set the indication information to be used for indicating that the configuration information for mobility is allowed to be used for performing failure recovery, or in response to a failure of performing failure recovery based on the configuration information for mobility, set the indication information to be used for indicating that the configuration information for mobility is not allowed to be used for performing failure recovery.

In one embodiment, the first information is counting information; the processing unit 1501 is further configured to, in response to a presence of the counting information and the counting information having a value less than a first count value, determine that the configuration information for mobility is allowed to be used for performing failure recovery, or in response to an absence of the counting information, or, the counting information having a value greater than or equal to the first count value, determine that the configuration information for mobility is not allowed to be used for performing failure recovery.

In one embodiment, the first information is a count value of a counter; the processing unit 1501 is further configured to, in response to the count value not reaching a maximum value of the counter, determine that the configuration information for mobility is allowed to be used for performing failure recovery, or in response to the count value reaching the maximum value of the counter, determine that the configuration information for mobility is not allowed to be used for performing failure recovery.

In one embodiment, the processing unit 1501 is further configured to, in response to second configuration information being received from a network device and the second configuration information indicating the first count value or a maximum value of a counter, set the counting information or the counter to be used for indicating that the configuration information for mobility is allowed to be used for performing failure recovery, or in response to the second configuration information indicating that the configuration information for mobility is not allowed to be used, not set the counting information or set a count value of the counter to the maximum value of the counter, to be used for indicating that the configuration information for mobility is not allowed to be used for performing failure recovery.

In one embodiment, the processing unit 1501 is further configured to, in response to second configuration information from a network device not being received, set the counting information or a counter to be used for indicating that the configuration information for mobility is allowed to be used, or in response to the second configuration information not being received, not set the counting information or set a count value of the counter to a maximum value of the counter, to be used for indicating that the configuration information for mobility is not allowed to be used for performing failure recovery.

In one embodiment, the processing unit 1501 is further configured to, increment the counting information or the count value of the counter by 1 upon performing failure recovery based on the configuration information for mobility, or reset the counting information or the count value of the counter to zero or restore the counting information or the count value of the counter to an initial value, upon successful failure recovery based on the configuration information for mobility or a successful access of the terminal device to a cell group.

In one embodiment, the processing unit 1501 is further configured to, determine, according to a number of consecutive failures in performing failure recovery based on the configuration information for mobility, whether failure recovery is allowed to be performed based on the configuration information for mobility.

In one embodiment, the processing unit 1501 is further configured to, in response to the number of consecutive failures being less than a first number threshold, determine that failure recovery is allowed to be performed based on the configuration information for mobility, or in response to the number of consecutive failures being greater than or equal to the first number threshold, determine that failure recovery is not allowed to be performed based on the configuration information for mobility.

In one embodiment, the processing unit 1501 is further configured to determine whether failure recovery is allowed to be performed based on the configuration information for mobility, depending on whether the configuration information for mobility is stored.

In one embodiment, the processing unit 1501 is further configured to, in response to the configuration information for mobility being stored, determine that failure recovery is allowed to be performed based on the configuration information for mobility, or in response to the configuration information for mobility not being stored, determine that failure recovery is not allowed to be performed based on the configuration information for mobility.

In one embodiment, the processing unit 1501 is further configured to, in response to a failure of performing failure recovery based on the configuration information for mobility, delete the configuration information for mobility.

In one embodiment, the configuration information for mobility includes at least one of: configuration information for selective activation of cell groups, or configuration information for mobility management based on conditions.

In one embodiment, in performing failure recovery based on the configuration information for mobility, a cell for failure recovery is selected by at least one of: performing cell selection during a re-establishment procedure to obtain the cell for failure recovery; selecting, according to a network configuration, the cell for failure recovery from the configuration information for mobility; selecting, according to a protocol specification, the cell for failure recovery from the configuration information for mobility; or selecting, according to a terminal device's implementation, the cell for failure recovery from the configuration information for mobility.

Referring to FIG. 16, a schematic diagram of the structure of another communication device 160 provided by embodiments of the present application is shown. The device is applied to a network device, the device including: a transceiver unit 1601 configured to send a terminal device information for the terminal device to determine whether failure recovery is allowed to be performed based on configuration information for mobility.

In one embodiment, the transceiver unit 1601 is further configured to send first configuration information to the terminal device, wherein the first configuration information indicates that the configuration information for mobility is allowed to be used for performing failure recovery, or, the configuration information for mobility is not allowed to be used for performing failure recovery.

In one embodiment, the transceiver unit 1601 is further configured to send second configuration information to the terminal device, wherein the second configuration information indicates a first count value or a maximum value of a counter; or the second configuration information indicates that the configuration information for mobility is not allowed to be used for performing failure recovery.

In one embodiment, the transceiver unit 1601 is further configured to send indication information to the terminal device for indicating the terminal device to delete the configuration information for mobility after a failure of performing failure recovery based on the configuration information for mobility.

In one embodiment, the configuration information for mobility comprises at least one of: configuration information for selective activation of cell groups, or configuration information for mobility management based on conditions.

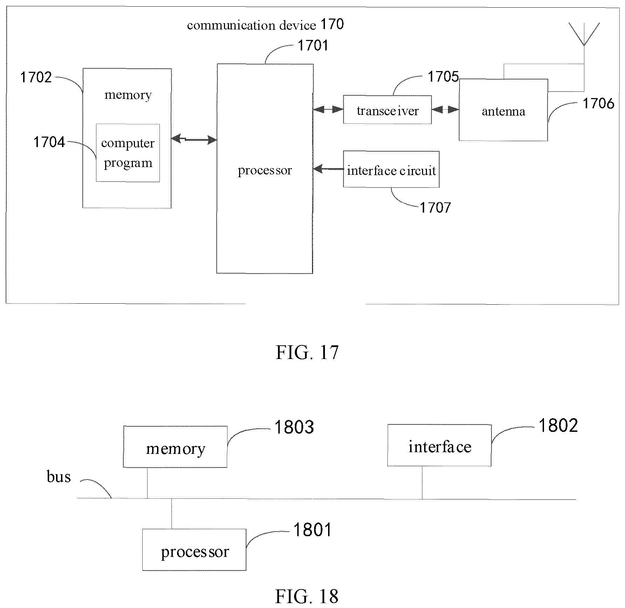

Referring to FIG. 17, FIG. 17 is a schematic diagram of a structure of another communication device 170 provided by embodiments of the present application. The communication device 170 may be a network device, a terminal device (such as the terminal device in the aforementioned method embodiments), a chip, a chip system, or a processor, etc. that supports the network device to realize the above-described methods, or a chip, a chip system, or a processor, etc. that supports the terminal device to realize the above-described methods. The device may be used to realize the methods described in the foregoing method embodiments, for specific details, please refer to the description in the foregoing method embodiments.

The communication device 170 may include one or more processors 1701. The processor 1701 may be a general purpose processor or a specialized processor. For example, it may be a baseband processor or a central processor. The baseband processor may be used for processing communication protocols as well as communication data, and the central processor may be used for controlling a communication device (e.g., a base station, baseband chip, terminal device, terminal device chip, DU or CU, etc.), executing a computer program, and processing data of the computer program.

Optionally, one or more memories 1702 may also be included in the communication device 170, on which a computer program 1704 may be stored. The processor 1701 executes the computer program 1704 to cause the communication device 170 to perform the methods described in the above method embodiments. Optionally, data may also be stored in the memory 1702. The communication device 170 and the memory 1702 may be provided separately or may be integrated together.

Optionally, the communication device 170 may also include a transceiver 1705 and an antenna 1706. The transceiver 1705 may be referred to as a transceiver unit, a transceiver device, or a transceiver circuit, etc., for realizing the transceiver function. The transceiver 1705 may include a receiver and a transmitter, the receiver may be referred to as a receiving device or a receiving circuit, etc., for realizing the receiving function, and the transmitter may be referred to as a transmitting device or a transmitting circuit, etc., for realizing the transmitting function.

Optionally, one or more interface circuits 1707 may also be included in the communication device 170. The interface circuit 1707 is used to receive code instructions and transmit them to the processor 1701. The processor 1701 runs the code instructions to cause the communication device 170 to perform the methods described in the above method embodiments.

When the communication device 170 is a terminal device (such as the terminal device in the aforementioned method embodiments), the processor 1701 is used to perform step S201 in FIG. 2, step S301 in FIG. 3, steps S401 and S402 in FIG. 4, step S501 in FIG. 5, step S601 in FIG. 6, steps S701, S702, S703, and S704 in FIG. 7, step S801 and S802 in FIG. 8, step S901 in FIG. 9, step S1001 in FIG. 10, steps S1101, S1102, S1103, and S1104 in FIG. 11, step S1201 in FIG. 12, and step S1301 in FIG. 13.

When the communication device 170 is a network device, the transceiver 1705 is used to perform step S1401 in FIG. 14.

In one implementation, the processor 1701 may include a transceiver for realizing the receiving and transmitting functions. The transceiver may be, for example, a transceiver circuit, or an interface, or an interface circuit. The transceiver circuit, interface, or interface circuit for realizing the receiving and transmitting functions may be separate or may be integrated together. The transceiver circuit, interface, or interface circuit described above may be used for code/data reading and writing, or, the transceiver circuit, interface, or interface circuit described above may be used for signal transmission or delivery.

In one implementation, the processor 1701 may hold a computer program 1704, which runs on the processor 1701 and may cause the communication device 170 to perform the methods described in the method embodiments above. The computer program 1704 may be solidified in the processor 1701, in which case the processor 1701 may be implemented by hardware.

In one implementation, the communication device 170 may include a circuit that can perform the functions of transmitting, receiving, or communicating as described in the aforementioned method embodiments. The processor and transceiver described in this application can be implemented on an integrated circuit (IC), analog IC, radio frequency integrated circuit (RFIC), mixed-signal IC, application-specific integrated circuit (ASIC), printed circuit board (PCB), electronic device, etc. The processor and transceiver can also be manufactured using various IC process technologies, such as complementary metal oxide semiconductor (CMOS), nMetal-oxide-semiconductor (NMOS), positive channel metal oxide semiconductor (PMOS), bipolar junction transistor (BJT), bipolar CMOS (BiCMOS), silicon germanium (SiGe), gallium arsenide (GaAs), etc.

The communication device in the above description of embodiments may be a network device or a terminal device (such as the first terminal device in the aforementioned method embodiments), but the scope of the communication device described in the present application is not limited thereto, and the structure of the communication device may not be limited by FIG. 8. The communication device may be a stand-alone device or may be part of a larger device. For example the described communication device may be:
(1) a stand-alone integrated circuit IC, or chip, or, a system or subsystem on a chip; (2) a collection of ICs having one or more ICs, optionally, the collection of ICs may also include storage components for storing data or computer programs; (3) an ASIC, such as a modem; (4) a module that can be embedded within other devices; (5) a receiver, terminal device, smart terminal device, cellular telephone, wireless device, handheld, mobile unit, in-vehicle device, network device, cloud device, artificial intelligence device, and the like; (6) other, and the like.

For the case where the communication device may be a chip or a system on a chip, reference can be made to the schematic diagram of the structure of the chip shown in FIG. 18. The chip shown in FIG. 18 includes a processor 1801 and an interface 1802. There may be one or more processors 1801 and more than one interface 1802.

Optionally, the chip further includes a memory 1803, the memory 1803 being used to store necessary computer programs and data.

It will also be appreciated by those skilled in the art that the various illustrative logical blocks and steps listed in the embodiments of the present application can be implemented by electronic hardware, computer software, or a combination of both. Whether such functionality is implemented by hardware or software depends on the particular application and the design requirements of the overall system. Those skilled in the art may, for each particular application, use various methods to implement the described functionality, but such implementations should not be construed as being outside the scope of protection of the embodiments of the present application.

Embodiments of the present application also provide a communication system including a communication device as a terminal device (such as the terminal device in the aforementioned method embodiments) in the aforementioned embodiment of FIG. 15 and a communication device as a network device in the aforementioned embodiment of FIG. 16.

The present application also provides a readable storage medium having stored thereon instructions which, when executed by a computer, realize the functions of any of the above method embodiments.

The present application also provides a computer program product which, when executed by a computer, realizes the functions of any of the above method embodiments.

The above embodiments may be implemented in whole or in part by software, hardware, firmware, or any combination thereof. When implemented using software, they may be implemented, in whole or in part, in the form of a computer program product. The computer program product includes one or more computer programs. When the computer programs are loaded and executed on a computer, they wholly or partially generate the processes or functions described in the embodiments of this application. The computer can be a general-purpose computer, a special-purpose computer, a computer network, or other programmable devices. The computer programs can be stored in a computer-readable storage medium or transmitted from one computer-readable storage medium to another. For example, the computer programs can be transmitted from one website, computer, server, or data center to another website, computer, server, or data center via wired means (such as coaxial cable, optical fiber, digital subscriber line (DSL)) or wireless means (such as infrared, radio, microwave, etc.). The computer-readable storage medium can be any available medium that can be accessed by a computer or a data storage device such as a server or data center that integrates one or more available media. The available medium can be a magnetic medium (e.g., floppy disk, hard disk, magnetic tape), an optical medium (e.g., high-density digital video disc (DVD)), or a semiconductor medium (e.g., solid-state disk (SSD)), etc.

The person of ordinary skill in the art may understand that the first, second and other various numerical numbers involved in this application are only for the convenience of the description of the distinction, and are not used to limit the scope of the embodiments of this application, nor are they used to indicate the order of precedence.

The "at least one" in the present application may also be described as one or more, and the "plurality" may be two, three, four, or more, without limitation in the present application. In the embodiments of this application, for a technical feature, distinctions are made among the technical elements within this feature through the use of "first," "second," "third," "A," "B," "C," and "D," etc. However, there is no sequential or size order implied by the descriptions "first," "second," "third," "A," "B," "C," and "D" for these technical elements.

The correspondences shown in the tables of this application may be configured or may be predefined. The values of the information in the respective tables are merely examples and may be configured to other values, which are not limited by this application. In configuring the correspondence between the information and the respective parameters, it is not necessarily required that all the correspondences illustrated in the respective tables must be configured. For example, the correspondences illustrated in certain rows of the tables in the present application may not be configured. For example, it is possible to make appropriate adjustments based on the above tables, such as splitting, merging, and the like. The names of the parameters shown in the headings in the above-described tables may also be other names understandable by the communication device, and the values or representations of the parameters thereof may also be other values or representations understandable by the communication device. The above tables may also be realized using other data structures, such as arrays, queues, containers, stacks, linear tables, pointers, chain lists, trees, graphs, structures, classes, heaps, or hash tables.

The term "predefined" in this application may be understood as defined, pre-defined, stored, pre-stored, pre-negotiated, pre-configured, cured, or pre-fired.

One of ordinary skill in the art may realize that the units and algorithmic steps of the various examples described in conjunction with the embodiments disclosed herein are capable of being implemented in electronic hardware, or a combination of computer software and electronic hardware. Whether these functions are performed in hardware or software depends on the particular application and design constraints of the technical solution. A person skilled in the art may use different methods to implement the described functions for each particular application, but such implementations should not be considered outside the scope of this application.

It is clearly understood by those skilled in the field to which it belongs that, for the convenience and brevity of the description, the specific working processes of the above-described systems, apparatuses, and units can be referred to the corresponding processes in the foregoing embodiments of the method, and will not be repeated herein.

The above description is merely specific embodiments of the present application, but the scope of protection of the present application is not limited thereto. Any technician familiar with this technical field can easily conceive of variations or substitutions within the technical scope disclosed in this application, which should all be encompassed within the scope of protection of the present application. Therefore, the scope of protection of the present application should be determined by the scope of protection of the claims described.

## Claims

1. An indication method for failure recovery, applied to a terminal device, the method comprising:
determining whether failure recovery is allowed to be performed based on configuration information for mobility.

2. The method according to claim 1, further comprising:
in response to failure recovery being allowed to be performed based on the configuration information for mobility, performing failure recovery based on the configuration information for mobility; and/or
in response to failure recovery not being allowed to be performed based on the configuration information for mobility, performing failure recovery in a manner other than the one in which failure recovery is performed based on the configuration information for mobility.

3. The method according to claim 1, wherein determining whether failure recovery is allowed to be performed based on the configuration information for mobility comprises:
determining, according to first information, whether failure recovery is allowed to be performed based on the configuration information for mobility.

4. The method according to claim 3, wherein the first information is stored by the terminal device and contained in a variable of the terminal device that is the same as, or different from a variable storing the configuration information for mobility.

5. The method according to claim 3, wherein the first information is indication information; and wherein determining, according to the first information, whether failure recovery is allowed to be performed based on the configuration information for mobility comprises:
in response to a presence of the indication information, determining that failure recovery is allowed to be performed based on the configuration information for mobility, or
in response to an absence of the indication information, determining that failure recovery is not allowed to be performed based on the configuration information for mobility.

6. The method according to claim 3, wherein the first information is indication information; and wherein determining, according to the first information, whether failure recovery is allowed to be performed based on the configuration information for mobility comprises:
in response to the indication information having a first value, determining that failure recovery is allowed to be performed based on the configuration information for mobility, or
in response to the indication information having a second value other than the first value, determining that failure recovery is not allowed to be performed based on the configuration information for mobility.

7. The method according to claim 5 or 6, further comprising:
in response to first configuration information being received from a network device and indicating that the configuration information for mobility is allowed to be used for performing failure recovery, setting the indication information to be used for indicating that the configuration information for mobility is allowed to be used for performing failure recovery, or
in response to the first configuration information indicating that the configuration information for mobility is not allowed to be used for performing failure recovery, setting the indication information to be used for indicating that the configuration information for mobility is not allowed to be used for performing failure recovery.

8. The method according to claim 5 or 6, wherein, before determining, according to the first information, whether failure recovery is allowed to be performed based on the configuration information for mobility, the method further comprises:
in response to first configuration information from a network device not being received, setting the indication information to be used for indicating that the configuration information for mobility is allowed to be used for performing failure recovery, or
in response to the first configuration information not being received, setting the indication information to be used for indicating that the configuration information for mobility is not allowed to be used for performing failure recovery.

9. The method according to claim 5 or 6, further comprising:
in response to performing failure recovery based on the configuration information for mobility, setting the indication information to be used for indicating that the configuration information for mobility is not allowed to be used for performing failure recovery, or
in response to a successful failure recovery based on the configuration information for mobility, or, a successful access of the terminal device to a cell group, setting the indication information to be used for indicating that the configuration information for mobility is allowed to be used for performing failure recovery, or
in response to a failure of performing failure recovery based on the configuration information for mobility, setting the indication information to be used for indicating that the configuration information for mobility is not allowed to be used for performing failure recovery.

10. The method according to claim 3, wherein the first information is counting information; and wherein determining, according to the first information, whether failure recovery is allowed to be performed based on the configuration information for mobility comprises:
in response to a presence of the counting information and the counting information having a value less than a first count value, determining that the configuration information for mobility is allowed to be used for performing failure recovery, or
in response to an absence of the counting information, or, the counting information having a value greater than or equal to the first count value, determining that the configuration information for mobility is not allowed to be used for performing failure recovery.

11. The method according to claim 3, wherein the first information is a count value of a counter; and wherein determining, according to the first information, whether failure recovery is allowed to be performed based on the configuration information for mobility comprises:
in response to the count value not reaching a maximum value of the counter, determining that the configuration information for mobility is allowed to be used for performing failure recovery, or
in response to the count value reaching the maximum value of the counter, determining that the configuration information for mobility is not allowed to be used for performing failure recovery.

12. The method according to claim 10 or 11, further comprising:
in response to second configuration information being received from a network device and the second configuration information indicating the first count value or a maximum value of a counter, setting the counting information or the counter to be used for indicating that the configuration information for mobility is allowed to be used for performing failure recovery, or
in response to the second configuration information indicating that the configuration information for mobility is not allowed to be used, not setting the counting information or setting a count value of the counter to the maximum value of the counter, to be used for indicating that the configuration information for mobility is not allowed to be used for performing failure recovery.

13. The method according to claim 10 or 11, wherein, before determining, according to the first information, whether failure recovery is allowed to be performed based on the configuration information for mobility, the method further comprises:
in response to second configuration information from a network device not being received, setting the counting information or a counter to be used for indicating that the configuration information for mobility is allowed to be used, or
in response to the second configuration information not being received, not setting the counting information or setting a count value of the counter to a maximum value of the counter, to be used for indicating that the configuration information for mobility is not allowed to be used for performing failure recovery.

14. The method according to claim 10 or 11, further comprising:
incrementing the counting information or the count value of the counter by 1 upon performing failure recovery based on the configuration information for mobility, or
resetting the counting information or the count value of the counter to zero or restoring the counting information or the count value of the counter to an initial value, upon successful failure recovery based on the configuration information for mobility or a successful access of the terminal device to a cell group.

15. The method according to claim 1, wherein determining whether failure recovery is allowed to be performed based on the configuration information for mobility comprises:
determining, according to a number of consecutive failures in performing failure recovery based on the configuration information for mobility, whether failure recovery is allowed to be performed based on the configuration information for mobility.

16. The method according to claim 15, wherein determining, according to a number of consecutive failures in performing failure recovery based on the configuration information for mobility, whether failure recovery is allowed to be performed based on the configuration information for mobility comprises:
in response to the number of consecutive failures being less than a first number threshold, determining that failure recovery is allowed to be performed based on the configuration information for mobility, or
in response to the number of consecutive failures being greater than or equal to the first number threshold, determining that failure recovery is not allowed to be performed based on the configuration information for mobility.

17. The method according to claim 1, wherein determining whether failure recovery is allowed to be performed based on the configuration information for mobility comprises:
determining whether failure recovery is allowed to be performed based on the configuration information for mobility, depending on whether the configuration information for mobility is stored.

18. The method according to claim 17, wherein determining whether failure recovery is allowed to be performed based on the configuration information for mobility, depending on whether the configuration information for mobility is stored, comprises:
in response to the configuration information for mobility being stored, determining that failure recovery is allowed to be performed based on the configuration information for mobility, or
in response to the configuration information for mobility not being stored, determining that failure recovery is not allowed to be performed based on the configuration information for mobility.

19. The method according to claim 18, further comprising:
in response to a failure of performing failure recovery based on the configuration information for mobility, deleting the configuration information for mobility.

20. The method according to claim 1, wherein the configuration information for mobility comprises at least one of: configuration information for selective activation of cell groups, or configuration information for mobility management based on conditions.

21. The method according to claim 1, wherein, in performing failure recovery based on the configuration information for mobility, a cell for failure recovery is selected by at least one of:
performing cell selection during a re-establishment procedure to obtain the cell for failure recovery;
selecting, according to a network configuration, the cell for failure recovery from the configuration information for mobility;
selecting, according to a protocol specification, the cell for failure recovery from the configuration information for mobility; or
selecting, according to a terminal device's implementation, the cell for failure recovery from the configuration information for mobility.

22. An indication method for failure recovery, applied to a network device, the method comprising:
sending a terminal device information for the terminal device to determine whether failure recovery is allowed to be performed based on configuration information for mobility.

23. The method according to claim 22, wherein sending the terminal device the information for the terminal device to determine whether failure recovery is allowed to be performed based on the configuration information for mobility comprises:
sending first configuration information to the terminal device, wherein the first configuration information indicates that the configuration information for mobility is allowed to be used for performing failure recovery, or, the configuration information for mobility is not allowed to be used for performing failure recovery.

24. The method according to claim 22, wherein sending the terminal device the information for the terminal device to determine whether failure recovery is allowed to be performed based on the configuration information for mobility comprises:
sending second configuration information to the terminal device, wherein the second configuration information indicates a first count value or a maximum value of a counter; or the second configuration information indicates that the configuration information for mobility is not allowed to be used for performing failure recovery.

25. The method according to claim 22, wherein sending the terminal device the information for the terminal device to determine whether failure recovery is allowed to be performed based on the configuration information for mobility comprises:
sending indication information to the terminal device for indicating the terminal device to delete the configuration information for mobility after a failure of performing failure recovery based on the configuration information for mobility.

26. The method according to claim 22, wherein the configuration information for mobility comprises at least one of: configuration information for selective activation of cell groups, or configuration information for mobility management based on conditions.

27. An indication device for failure recovery, applied to a terminal device, the indication device comprising:
a processing unit configured to determine whether failure recovery is allowed to be performed based on configuration information for mobility.

28. An indication device for failure recovery, applied to a network device, the indication device comprising:
a transceiver unit configured to send a terminal device information for the terminal device to determine whether failure recovery is allowed to be performed based on configuration information for mobility.

29. A communication device, comprising:
a processor; and
a memory storing a computer program,
wherein the processor executes the computer program stored in the memory to cause the device to perform the method according to any one of claims 1 to 21.

30. A communication device, comprising:
a processor; and
a memory storing a computer program,
wherein the processor executes the computer program stored in the memory to cause the device to perform the method according to any one of claims 22 to 26.

31. A communication device, comprising a processor and an interface circuit, wherein
the interface circuit is configured to receive a code instruction and transmit the code instruction to the processor; and
the processor is configured to run the code instruction to perform the method according to any one of claims 1 to 21.

32. A communication device, comprising a processor and an interface circuit, wherein
the interface circuit is configured to receive a code instruction and transmit the code instruction to the processor; and
the processor is configured to run the code instruction to perform the method according to any one of claims 22 to 26.

33. A computer-readable storage medium for storing an instruction that, when the instruction is executed, causes the method according to any one of claims 1 to 21 to be implemented.

34. A computer-readable storage medium for storing an instruction that, when the instruction is executed, causes the method according to any one of claims 22 to 26 to be implemented.
